# EUROPÄISCHE PATENTSCHRIFT

(11) **EP 1 976 893 B1**
(45) Veröffentlichungstag und Bekanntmachung des Hinweises auf die Patenterteilung: **19.05.2010**
(21) Anmeldenummer: 07703594.7
(22) Anmeldetag: 03.01.2007
(51) Int. Cl.: C08F 210/02, C09D 123/08

(54) **VERFAHREN ZUR BEHANDLUNG VON OBERFLÄCHEN**
METHOD FOR TREATING SURFACES
PROCEDE DE TRAITEMENT DE SURFACES

(30) Priorität: 09.01.2006 EP 06100162
(43) Veröffentlichungstag der Anmeldung: 08.10.2008
(73) Patentinhaber: BASF SE, 67056 Ludwigshafen (DE)
(72) Erfinder: PFEIFFER, Thomas, 67459 Böhl-Iggelheim (DE); WITTELER, Helmut, 67157 Wachenheim (DE); DIETSCHE, Frank, 69198 Schriesheim (DE); HEIDENFELDER, Thomas, 67125 Dannstadt-Schauernheim (DE); MÄHLING, Frank-Olaf, 68165 Mannheim (DE); FECHTENKÖTTER, Andreas, Singapore 098647 (SG); EHLE, Michael, 67071 Ludwigshafen (DE); NICOLINI, Fabio, 67112 Mutterstadt (DE)
(86) Internationale Anmeldenummer: PCT/EP2007/050019
(87) Internationale Veröffentlichungsnummer: WO 2007/080138

(56) Entgegenhaltungen:
- WO-A-2006/021309
- DE-A1- 3 415 527
- SU-A- 305 166
- US-A- 3 445 434

## Beschreibung

Die vorliegende Erfindung betrifft ein Verfahren zur Behandlung von Oberflächen unter Verwendung von einem oder mehreren Copolymeren (A), die als Comonomere einpolymerisiert enthalten:
(a) Ethylen,
(b) einen oder mehrere Alkenylphosphonsäurediester,
(c) gegebenenfalls ein oder mehrere weitere radikalisch copolymerisierbare Comonomere.

Weiterhin betrifft die vorliegende Erfindung Oberflächen, die mit Copolymer (A) beschichtet sind.

Die Oberflächenbehandlung beispielsweise von Metall- oder Polymeroberflächen ist ein Gebiet von großer wirtschaftlicher Bedeutung. Bei der Oberflächenbehandlung kann es beispielsweise um eine Behandlung zum Zwecke der Lackhaftung, des Unterwanderungsschutzes eines Lacks bei korrosiver Belastung, zur Verbesserung des Reibungskoeffizienten mit anderen Oberflächen - insbesondere beim Kaltverformen, etwa durch Tiefziehen, Falzen, Bördeln, Biegen, zur Erreichung eines dekorativen Aussehens, zur Verbesserung der Verklebbarkeit, der Schweißbarkeit und insbesondere des Korrosionsschutzes gehen.

Es ist bekannt, Oberflächen korrosionsfest auszurüsten, indem man sie mit Verbindungen wie beispielsweise 1,12-Dodecan-di(phosphonsäuredimethylester) behandelt. Eine derartige Behandlung hat jedoch den Nachteil, ausschließlich als Unterwanderungsschutz für Kombinationen von bestimmten Metallen mit bestimmten Lacken zu wirken und bei alleiniger Anwendung keine Korrosionsschutzschicht aufzubauen.

Es bestand also die Aufgabe, ein Verfahren bereit zu stellen, um Oberflächen beispielsweise von Metall oder Polymer zu behandeln und damit insgesamt verbesserte Eigenschaften und insbesondere einen verbesserten Korrosionsschutz zu erreichen. Es bestand weiterhin die Aufgabe, beschichtete Oberflächen bereit zu stellen. Es bestand weiterhin die Aufgabe, geeignete Stoffe zu finden, die zur Behandlung von Oberflächen besonders geeignet sind.

Demgemäß wurde die eingangs definierte Verwendung von Copolymeren (A) gefunden, und demgemäß wurde das eingangs definierte Verfahren gefunden.

Copolymere von Ethylen mit Vinylphosphonsäuredimethylester oder Vinylphosponsäuredichloromethylester sind an sich bekannt, siehe beispielsweise DE 34 15 527 A und SU 305 166. DE 34 15 527 A schlägt vor, derartige Copolymere zur Deaktivierung von Ziegler-Katalysatoren einzusetzen.

Die vorliegende Erfindung geht aus von Copolymeren (A), die einpolymerisiert enthalten:
(a) Ethylen,
(b) einen oder mehrere Alkenylphosphonsäurediester,
   vorzugsweise handelt es sich bei Alkenylphosphonsäurediester (b) um eine Verbindung der Formel I 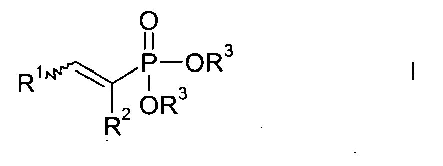 wobei die Variablen wie folgt definiert sind:
   R¹ gewählt aus verzweigtem und vorzugsweise unverzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, n-Butyl, insbesondere Methyl,
      und ganz besonders bevorzugt Wasserstoff,
   R² gewählt aus verzweigtem und vorzugsweise unverzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt unverzweigtes C₁-C₄-Alkyl wie Methyl, Ethyl, n-Propyl, n-Butyl, insbesondere Methyl,
      und ganz besonders bevorzugt Wasserstoff,
   R³ verschieden oder vorzugsweise gleich und gewählt aus
      Phenyl, unsubstituiert oder ein- bis dreimal substituiert mit beispielsweise Halogen, z.B. Chlor, oder beispielsweise mit unverzweigtem C₁-C₄-Alkyl wie Methyl, Ethyl, n-Propyl, n-Butyl, insbesondere Methyl,
      Benzyl,
      und verzweigtem und vorzugsweise unverzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt unverzweigtes C₁-C₄-Alkyl wie Methyl, Ethyl, n-Propyl, n-Butyl, insbesondere Methyl.

Dabei können die Reste R³ miteinander unter Bildung eines fünf- bis 10-gliedrigen Rings verbunden sein. So kann die Gruppe P(O)(OR³)₂ beispielsweise sein: 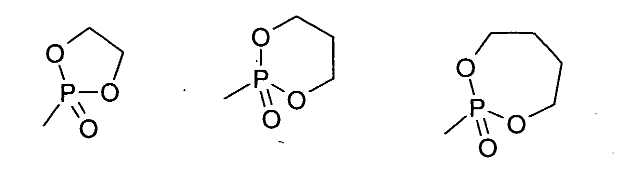
(c) gegebenenfalls ein oder mehrere weitere radikalisch copolymerisierbare Comonomere.

In einer Ausführungsform der vorliegenden Erfindung sind die beiden Reste R³ verschieden, wobei der eine Rest R³ beispielsweise Methyl und der andere Ethyl oder n-Propyl oder iso-Propyl bedeutet.

In einer anderen, bevorzugten Ausführungsform der vorliegenden Erfindung sind die beiden Reste R³ gleich und insbesondere gewählt aus Methyl und Ethyl.

In einer Ausführungsform der vorliegenden Erfindung bedeuten R¹ und R² jeweils Wasserstoff, und die Reste R³ sind jeweils gleich und gewählt aus C₁-C₄-Alkyl, insbesondere gewählt aus Methyl und Ethyl.

In der vorliegenden Erfindung sind ein oder mehrere weitere radikalisch copolymerisierbare Comonomere (c) gewählt aus
ethylenisch ungesättigten Carbonsäuren, beispielsweise Crotonsäure und insbesondere (Meth)acrylsäure,
ethylenisch ungesättigten C₄-C₁₀-Dicarbonsäuren und deren Anhydriden, (Meth)acrylsäure-C₁-C₁₀-Alkylester, insbesondere Methyl(meth)acrylat, Ethyl(meth)-acrylat, n-Butyl(meth)acrylat, 2-Ethylhexyl(meth)acrylat,
Ameisensäurevinylester,
C₁-C₁₀-Alkylcarbonsäurevinylester, beispielsweise Vinylacetat oder Vinylpropionat, C₁-C₂₀-Alkylvinyl- und allylethern und
α-Olefinen mit 3 bis 40 C-Atomen wie beispielsweise Isobuten, 1-Buten, Diisobuten, 1-Hexen und 1-Dodecen.

Bevorzugte Comonomere (c) sind gewählt aus ethylenisch ungesättigten Carbonsäuren, beispielsweise Crotonsäure und insbesondere (Meth)acrylsäure, und ethylenisch ungesättigten C₄-C₁₀-Dicarbonsäuren und deren Anhydriden, insbesondere Itaconsäureanhydrid und ganz besonders Maleinsäureanhydrid.

In einer Ausführungsform der vorliegenden Erfindung enthält Copolymer (A) kein weiteres Comonomer (c) einpolymerisiert.

In einer Ausführungsform der vorliegenden Erfindung handelt es sich bei Copolymer (A) um solches, das als Comonomere einpolymerisiert enthalten
(a) 50 bis 99,8 Gew.-%, bevorzugt 55 bis 98 Gew.-% Ethylen,
(b) 0,1 bis 49,9 Gew.-%, bevorzugt 1 bis 40 Gew.-% einen oder mehrere Alkenylphosphonsäurediester,
(c) 0,1 bis 49,9 Gew.-%, bevorzugt 1 bis 40 Gew.-% gegebenenfalls ein oder mehrere weitere radikalisch copolymerisierbare Comonomere.

Copolymere (A) kann man durch radikalisch initiierte Copolymerisation unter Hochdruckbedingungen herstellen, beispielsweise in gerührten Hochdruckautoklaven oder in Hochdruckrohrreaktoren. Die Herstellung in gerührten Hochdruckautoklaven ist bevorzugt. Gerührte Hochdruckautoklaven sind an sich bekannt, eine Beschreibung findet man in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996. Bei ihnen verhält sich überwiegend das Verhältnis Länge/Durchmesser in Intervallen von 5:1 bis 30:1, bevorzugt 10:1 bis 20:1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996.

Geeignete Druckbedingungen für die Copolymerisation sind 500 bis 4000 bar, bevorzugt 1500 bis 2500 bar. Bedingungen dieser Art werden im Folgenden auch als Hochdruck bezeichnet. Die Reaktionstemperaturen liegen im Bereich von 150 bis 300°C, bevorzugt im Bereich von 195 bis 280°C.

Die Copolymerisation kann man in Gegenwart eines Reglers durchführen. Als Regler verwendet man beispielsweise Wasserstoff oder mindestens einen aliphatischen Aldehyd oder mindestens ein aliphatisches Keton der allgemeinen Formel II 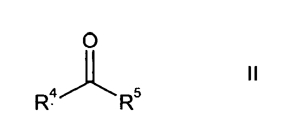 oder Mischungen derselben.

Dabei sind die Reste R⁴ und R⁵ gleich oder verschieden und ausgewählt aus Wasserstoff;
C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

In einer besonderen Ausführungsform sind die Reste R⁴ und R⁵ miteinander unter Bildung eines 4- bis 13-gliedrigen Rings kovalent verbunden. So können R⁴ und R⁵ beispielsweise gemeinsam sein: -(CH₂)₄-, -(CH₂)₅-, -(CH₂)₆, -(CH₂)₇-, -CH(CH₃)-CH₂-CH₂-CH(CH₃)- oder -CH(CH₃)-CH₂-CH₂-CH₂-CH(CH₃)-.

Besonders bevorzugte Regler sind Propionaldehyd, Aceton und Ethylmethylketon.

Beispiele für geeignete Regler sind weiterhin alkylaromatische Verbindungen, beispielsweise Toluol, Ethylbenzol oder ein oder mehrere Isomere des Xylols. Beispiele für gut geeignete Regler sind weiterhin Paraffine wie beispielsweise Isododekan (2,2,4,6,6-Pentamethylheptan) oder Isooktan.

Als Starter für die radikalische Copolymerisation können die üblichen Radikalstarter wie beispielsweise organische Peroxide, Sauerstoff oder Azoverbindungen eingesetzt werden. Auch Mischungen mehrerer Radikalstarter sind geeignet.

Geeignete Peroxide, ausgewählt aus kommerziell erhältlichen Substanzen, sind
- Didekanoylperoxid, 2,5-Dimethyl-2,5-di(2-ethylhexanoylperoxy)hexan, tert.-Amylperoxypivalat, tert.-Butylperoxypivalat, tert.-Amylperoxy-2-ethylhexanoat, Dibenzoylperoxid, tert.-Butylperoxy-2-ethylhexanoat, tert.-Butylperoxydiethylacetat, tert.-Butylperoxydiethylisobutyrat, 1,4-Di(tert.-butylperoxycarbonyl)-cyclohexan als Isomerengemisch, tert.-Butylperisononanoat 1,1-Di-(tert.-butylperoxy)-3,3,5-trimethylcyclohexan, 1,1-Di-(tert.-butylperoxy)-cyclohexan, Methyl-isobutylketonperoxid, tert.-Butylperoxyisopropylcarbonat, 2,2-Di-tert.-butylperox)butan oder tert.-Butylperoxacetat;
- tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylperoxid, 2,5-Dimethyl-2,5-di(tert.-butylperoxy)-hex-3-in, Di-tert.-butylperoxid, 1,3-Diisopropylbenzolmonohydroperoxid, Cumolhydroperoxid oder tert.-Butylhydroperoxid; oder
- dimere oder trimere Ketonperoxide, wie aus EP-A 0 813 550 bekannt.

Als Peroxide sind Di-tert.-butylperoxid, tert.-Butylperoxypivalat, tert.-Butylperoxyisononanoat oder Dibenzoylperoxid oder Gemische derselben besonders geeignet. Als Azoverbindung sei Azobisisobutyronitril ("AIBN") beispielhaft genannt. Radikalstarter werden in für Polymerisationen üblichen Mengen dosiert.

Zahlreiche kommerziell erhältliche organische Peroxide werden mit sogenannten Phlegmatisierern versetzt, bevor sie verkauft werden, um sie besser handhabbar zu machen. Als Phlegmatisierer sind beispielsweise Weißöl oder Kohlenwasserstoffe wie insbesondere Isododekan geeignet. Unter den Bedingungen der Hochdruckpolymerisation können derartige Phlegmatisierer eine molekulargewichtsregelnde Wirkung haben. Im Sinne der vorliegenden Erfindung soll unter dem Einsatz von Molekulargewichtsreglern der zusätzliche Einsatz weiterer Molekulargewichtsregler über den Einsatz der Phlegmatisierer hinaus verstanden werden.

Das Mengenverhältnis der Comonomeren bei der Dosierung entspricht üblicherweise nicht genau dem Verhältnis der Einheiten in den erfindungsgemäß verwendeten Copolymeren (A), weil Alkenylphosphonsäurediester (b) im Allgemeinen leichter in Copolymer (A) eingebaut werden als Ethylen.

Die Comonomere (a), (b) und gegebenenfalls (c) werden üblicherweise gemeinsam oder getrennt dosiert.

Die Comonomere (a), (b) und gegebenenfalls (c) können in einem Kompressor auf den Polymerisationsdruck komprimiert werden. In einer anderen Ausführungsform werden die Comonomeren zunächst mit Hilfe einer Pumpe auf einen erhöhten Druck von beispielsweise 150 bis 400 bar, bevorzugt 200 bis 300 bar und insbesondere 260 bar gebracht und danach mit einem Kompressor auf den eigentlichen Polymerisationsdruck.

Die Copolymerisation kann wahlweise in Abwesenheit und in Anwesenheit von Lösemitteln durchgeführt werden, wobei Mineralöle, Weißöl und andere Lösungsmittel, die während der Polymerisation im Reaktor zugegen sind und zum Phlegmatisieren des oder der Radikalstarter verwendet wurden, im Sinne der vorliegenden Erfindung nicht als Lösemittel gelten. Geeignete Lösemittel sind beispielsweise Toluol, Isododekan, Isomere des Xylols.

In einer Ausführungsform der vorliegenden Erfindung handelt es sich es sich bei Copolymer (A) um Copolymere mit einem mittleren Molekulargewicht M_{w} im Bereich von 1.000 bis 500.000 g/mol, bevorzugt 1.000 bis 200.000 g/mol und ganz besonders bevorzugt 1.500 bis 150.000 g/mol.

In einer Ausführungsform der vorliegenden Erfindung weist erfindungsgemäß verwendetes Copolymer (A) eine Schmelzemassefließrate (MFR) im Bereich von 1 bis 50 g/10 min, bevorzugt 5 bis 20 g/10 min, besonders bevorzugt 7 bis 15 g/10 min auf, gemessen bei 160°C und einer Belastung von 325 g nach EN ISO 1133.

In einer Ausführungsform der vorliegenden Erfindung weist erfindungsgemäß verwendetes Copolymer (A) bei 120°C eine kinematische Schmelzeviskosität v von 60 mm²/s bis 100.000 mm²/s auf, bevorzugt 100 mm²/s bis 50.000 mm²/s.

In einer Ausführungsform der vorliegenden Erfindung liegt der Schmelzbereich von erfindungsgemäß verwendetem Copolymer (A) im Bereich von 50 bis 120°C, bevorzugt im Bereich von 60 bis 110°C, bestimmt durch DSC nach DIN 51007.

In einer Ausführungsform der vorliegenden Erfindung kann der Schmelzbereich von erfindungsgemäß verwendetem Copolymer (A) breit sein und ein Temperaturintervall von mindestens 7 bis höchstens 20°C, bevorzugt mindestens 10°C und höchstens 15°C betreffen.

In einer anderen Ausführungsform der vorliegenden Erfindung ist der Schmelzpunkt von erfindungsgemäß verwendetem Copolymer (A) scharf und liegt in einem Temperaturintervall von weniger als 2°C, bevorzugt weniger als 1°C, bestimmt nach DIN 51007.

Die Dichte von erfindungsgemäß verwendetem Copolymer (A) beträgt üblicherweise 0,89 bits 1,10 g/cm³, bevorzugt 0,92 bis 0,99 g/cm³, bestimmt nach DIN 53479.

Erfindungsgemäß verwendete Copolymere (A) können alternierende Copolymere sein oder Blockcopolymere oder vorzugsweise statistische Copolymere.

Man verwendet vorstehend beschriebenes Copolymer (A) erfindungsgemäß zur Behandlung von Oberflächen. Zur Durchführung des erfindungsgemäßen Verfahrens geht man aus von einer oder mehreren Oberflächen, die aus beliebigem Material sein kann. Bevorzugt als Material sind Kunststoffe, besonders bevorzugt ein- oder mehrphasige Kunststoffblends bzw. Compounds, insbesondere mit technischen Thermoplastanteilen wie beispielsweise Polyethylen, Polypropylen, Polystyrol, Polyamiden, Polyacrylnitril, PMMA, und Metalle, wobei der Begriff "Metalle" im Sinne der vorliegenden Erfindung auch Legierungen umfasst. Besonders geeignete Legierungen sind solche mit vorwiegend Eisen, Aluminium, Nickel, Chrom, Kupfer, Titan, Zink, Zinn, Magnesium, Kobalt, wobei eine besonders geeignete Legierung Stahl ist, beispielsweise Chrom-Nickel-Stahl, Edelstahl oder auch verzinkter Stahl. Es kann sich bei aus einem oder mehreren der vorstehenden Metallen bestehenden Oberflächen um eine Beschichtung handeln, die eine Oberfläche aus einem anderen Metall, Holz oder Kunststoff, vollständig oder partiell bedeckt.

Erfindungsgemäß zu behandelnde Oberflächen können beliebige Formen annehmen, sie können eben oder gebogen sein, und es kann sich bei ihnen um Innen- oder Außenoberflächen von einem oder mehreren Gegenständen handeln.

Erfindungsgemäß zu behandelnde Oberflächen können glatt sein, insbesondere für das unbewaffnete menschliche Auge ein glattes Erscheinungsbildung aufweisen, oder aber strukturiert, beispielsweise können sie Erhebungen oder Vertiefungen aufweisen, die beispielsweise punktförmig oder in Form von Rillen ausgestaltet sind.

Zur Durchführung des erfindungsgemäßen Verfahrens kann man beispielsweise wie folgt vorgehen.

In einer Ausführungsform der vorliegenden Erfindung kann man so vorgehen, das man eine Metall- oder Polymeroberfläche mit einer Lösung von Copolymer (A) benetzt. Dazu kann man beispielsweise so vorgehen, dass man Copolymer (A) in einer Flüssigkeit, beispielsweise in einem organischen Lösungsmittel oder in Wasser, löst oder dispergiert oder emulgiert und dann mit der zu behandelnden Oberfläche kontaktiert. Auf eine anschließende Trocknung der erfindungsgemäß behandelten Oberfläche wird in dieser Ausführungsform verzichtet.

In einer Ausführungsform handelt es sich bei der zu behandelnden Oberfläche um die Innenoberfläche einer Einrichtung, die als Kühlkreislauf dient, beispielsweise in Automobilen oder Kraftwerken. Wünscht man erfindungsgemäß Oberflächen von Einrichtungen zu behandeln, die als Kühlkreisläufe dienen, so kann man Copolymer (A) in einer Flüssigkeit, die gleichzeitig auch als Bestandteil des oder der Kühlmittel dienen kann, beispielsweise Salzlösung, lösen, dispergieren oder emulgieren und in den Kühlkreislauf einspeisen. Geeignete Konzentrationen von Copolymer (A) in der gesamten als Kühlmittel dienenden Flüssigkeit sind beispielsweise 0,05 bis 30 Gew.-%, bevorzugt 0,1 bis 10 Gew.-%. Man kann das Einspeisen von Copolymer (A) einmalig durchführen oder kontinuierlich oder periodisch. Behandelt man erfindungsgemäß
Oberflächen von Einrichtungen, die als Kühlkreisläufe dienen, so beobachtet man eine korrosionsinhibierende Wirkung.
In einer Ausführungsform der vorliegenden Erfindung handelt es sich bei Kühlkreisläufen um Bestandteile von Kühlschränke oder Gefriertruhen.

In einer Ausführungsform der vorliegenden Erfindung benetzt man eine Metall- oder Kunststoffoberfläche beim Bohren, Fräsen, Drehen, Schneiden, Schleifen, Gewindeschneiden oder beim Walzen und/oder Ziehen mit Lösung von Copolymer (A).

In einer anderen Ausführungsform der vorliegenden Erfindung versieht man eine Metall- oder Polymeroberfläche, die nicht vorbehandelt oder vorbehandelt sein kann, mit einer Schicht von erfindungsgemäßem Copolymer. Dazu kann man beispielsweise so vorgehen, dass man erfindungsgemäßem Copolymer in Form eines Films auf die zu behandelnde Oberfläche aufbringt und danach trocknet. Während des Trocknens kann der Film von erfindungsgemäßem Copolymer aushärten.

In einer Ausführungsform der vorliegenden Erfindung kann man eine Metall- oder Polymeroberfläche mit einer wässrigen Formulierung von Copolymer (A) behandeln.

Bei erfindungsgemäß vorbehandelten oder nicht vorbehandelten Metall- oder Polymeroberflächen handelt es sich vorzugsweise um Oberflächen unedler Metalle, beispielsweise um Oberflächen aus Eisen, Stahl, Zink oder Zink-Legierungen, Aluminium oder Aluminium-Legierungen, Zinn oder Zinn-Legierungen, Magnesium- oder Magnesium-Legierungen. Bei Stählen kann es sich sowohl um niedrig legierte als auch um hochlegierte Stähle handeln.

Das erfindungsgemäße Verfahren eignet sich insbesondere zum Passivieren von Oberflächen aus Zink, Zink-Legierungen, Aluminium oder Aluminium-Legierungen. Es kann sich dabei um Oberflächen von vollständig aus den vorstehend genannten Metallen bzw. der vorstehend genannten Legierung bestehenden Körpern oder Werkstücken handeln. Es kann sich aber auch um Oberflächen von mit Zink, Zink-Legierungen, Aluminium oder Aluminium-Legierungen beschichteten Körpern oder Werkstücken handeln, wobei die betreffenden Körper oder Werkstücke aus anderen Materialien, beispielsweise aus anderen Metallen, Legierungen, Polymeren oder Verbundwerkstoffen bestehen kann. Insbesondere kann es sich um die Oberfläche von verzinktem Eisen oder Stahl handeln. Der Begriff "verzinkt" umfasst auch das Beschichten mit einer Zink-Legierung, insbesondere die Feuerverzinkung mit ZnAl-Legierungen und elektrolytische Verzinkung mit ZnNi, ZnFe, ZnMn- und ZnCo-Legierungen.

Zn- oder Al-Legierungen sind dem Fachmann bekannt. Typische Bestandteile von Zink-Legierungen umfassen insbesondere Al, Mg, Pb, Si, Mg, Sn, Cu oder Cd. Es kann sich auch um Al/Zn-Legierungen handeln, bei denen Al- und Zn in annähernd gleicher Menge vorhanden sind. Bei Beschichtungen kann es sich um weitgehend homogene Beschichtungen oder auch um Konzentrationsgradienten aufweisende Beschichtungen handeln. Beispielsweise kann es sich um verzinkten Stahl handeln, der zusätzlich mit Mg bedampft wurde. Hierdurch kann oberflächlich eine Zn/Mg-Legierung entstehen. Typische Bestandteile von Aluminium-Legierungen umfassen insbesondere Mg, Mn, Si, Zn, Cr; Zr, Cu oder Ti.

In einer bevorzugten Ausführungsform des erfindungsgemäßen Verfahrens handelt es sich um die Oberfläche eines Bandmetalles, bevorzugt aus Aluminium oder Aluminium-Legierungen oder Eisen bzw. Stahl, insbesondere Bänder aus elektrolytisch verzinktem oder heißverzinktem Stahl.

In einer anderen Ausführungsform der vorliegenden Erfindung versieht man eine Metall- oder Polymeroberfläche, die nicht vorbehandelt oder vorbehandelt sein kann, mit einer Schicht von Copolymer (A). Dazu kann man beispielsweise so vorgehen, dass man Copolymer (A) in Form eines Films auf die zu behandelnde Oberfläche aufbringt und danach trocknet. Während des Trocknens kann der Film von Copolymer (A) aushärten.

Man kann die Oberfläche, die man erfindungsgemäß mit Copolymer (A) zu behandeln wünscht, insbesondere Oberflächen aus Metall, zunächst vorbehandeln, beispielsweise reinigen, insbesondere entfetten und/oder entölen, weiterhin beizen und/oder entrosten. In vielen Ausführungsformen umfasst ein Entfetten bzw. Entölen auch noch einen oder mehrere vorgeschaltete Vorreinigungsschritte. Nach dem gegebenenfalls durchgeführten Vorreinigungsschritt entfernt man verunreinigendes Fett oder Öl, das beispielsweise in Form von Flecken oder einer Öl- bzw. Fettschicht ausgebildet sein kann, im eigentlichen Reinigungsschritt mit Hilfe von mindestens einem Reinigungsbad, beispielsweise durch Eintauchen, oder mit Hilfe von mindestens einem auf die zu reinigende Oberfläche aufzubringenden Reinigungsmittel, das man aufsprühen, über die zu reinigende Oberfläche gießen oder mit Hilfe beispielsweise eines Schlauches aufspritzen kann. Die Reste an Reinigungsbad bzw. Reinigungsmittel kann man anschließend entfernen, beispielsweise mit einem oder mehreren aufeinander folgenden Spülbädern, und schließlich trocknet man die Oberfläche. Entfettungs- bzw. Entölungsbäder müssen in regelmäßigen Abständen entsorgt werden. Zur Entsorgung wird das im Entfettungs- bzw. Entölungsbad angesammelte Fett bzw. Öl in einem weiteren Arbeitsschritt von der wässrigen Phase abgetrennt. Aufgrund der Anwesenheit von Tensiden im Entfettungs- bzw. Entölungsbad sind zur Entsorgung weitere Chemikalien (Demulgatoren, Spalter) als Hilfsmittel erforderlich. Einzelheiten zum Entfetten bzw. Entölen von Metallen sowie dazu hilfreiche Formulierungen und Apparaturen sind beispielsweise unter dem Stichwort "Metals, Surface Treatment", in Ullmann's Encyclopedia of Industrial Chemistry, 6. Auflage, 2000, Wiley-VCH-Verlag GmbH, Weinheim Germany, dargestellt.

In einer Ausführungsform entfettet bzw. entölt man mit einem wässrigen Reinigungs- bzw. Entfettungsbad, bevorzugt in einem alkalischen Reinigungsbad bzw. einem alkalischen Entfettungsbad, das als Tensid ein oder mehrere sulfatierte polyalkoxylierte Fettalkohole oder ein oder mehrere sulfatierte polyalkoxylierte Phenole, beispielsweise jeweils mit einem Molekulargewicht Mₙ im Bereich von 800 bis 3000 g/mol, in einer Konzentration enthält, die beispielsweise im Bereich von 0,01 bis 20 Gew.-%, bevorzugt 0,02 bis 10 Gew.-% und besonders bevorzugt mindestens 0,1 Gew.-% liegen kann. Eingesetztes alkalisches Reinigungs- bzw. Entfettungsbad kann beispielsweise einen pH-Wert im Bereich von 8 bis 14, bevorzugt mindestens 9 und besonders bevorzugt 11 bis 13 aufweisen.

Reinigungs- bzw. Entfettungsbäder, insbesondere alkalische Reinigungs- bzw. Entfettungsbäder können eine Temperatur im Bereich von 10 bis 80°C aufweisen.

Das Reinigen bzw. Entfetten oder Entölen kann man beispielsweise über einen Zeitraum im Bereich von 0,1 bis 30 Sekunden durchführen.

Wünscht man zu beizen, so kann man beispielsweise mit Hilfe von ätzend wirkenden Lösungen, beispielsweise sauren oder alkalischen Lösungen, insbesondere salzsauren oder schwefelsauren Lösungen behandeln, oder im Falle von Metalloberflächen mit Hilfe des elektrischen Stroms entrosten. Wenn man mit Hilfe des elektrischen Stroms entrostet, so schaltet man die entsprechende Metalloberfläche vorzugsweise als Kathode und legt über die Dauer von 1 Sekunde bis eine Stunde, bevorzugt 5 Sekunden bis 10 Minuten elektrischen Strom an.

Im Anschluss an eine gegebenenfalls durchgeführte Vorbehandlung bringt man Copolymer (A) auf die erfindungsgemäß zu behandelnde Oberfläche auf. Dazu kann man sich gängiger Techniken bedienen. Beispielsweise kann man eine Formulierung, gewählt aus Lösungen, Dispersionen oder Emulsionen von Copolymer (A), oder eine Schmelze von Copolymer (A), bevorzugt eine Dispersion auf eine gegebenenfalls vorbehandelte Oberfläche aufbringen und dadurch eine Schicht von Copolymer (A) erzeugen. Man kann erfindungsgemäß für eine ungleichmäßige oder vorzugsweise gleichmäßige Schichtdicke von Copolymer (A) sorgen.

In einer Ausführungsform der vorliegenden Erfindung kann man das Aufbringen als Spritzen, Sprühen, Rakeln, Walzen, Tauchen, Streichen oder elektrophoretisches Lackieren ausführen.

Die Schichtdicke von Copolymer (A) kann beispielsweise im Bereich von 10 nm bis 100 µm liegen, bevorzugt 100 nm bis 10 µm. Die Schichtdicke von Copolymer (A) lässt sich beispielsweise über die Art und Menge der aufgetragenen Komponenten sowie die Einwirkzeit beeinflussen. Bevorzugt ist die Einstellung der Schichtdicke von Copolymer (A) über die Konzentration von Copolymer (A) in der zur Beschichtung eingesetzten vorzugsweise wässrigen Formulierung. Weiterhin lässt sie sich durch verfahrenstechnische Parameter beeinflussen, beispielsweise durch Abrakeln oder Abwalzen zu viel aufgebrachter Formulierung. Die Schichtdicke im Rahmen der vorliegenden Erfindung wird nach dem Trocknen gemessen, man kann sie gravimetrisch oder mittels Röntgenfluoreszenz (Phosphor) bestimmen.

Bevorzugt bringt man Copolymer (A) zum Beschichten als Formulierung in einem geeigneten Lösemittel oder einem Gemisch verschiedener Lösemittel auf. Besonders bevorzugt wird Wasser als einziges Lösemittel eingesetzt. Weitere Komponenten eines Gemisches verschiedener Lösemittel umfassen insbesondere mit Wasser mischbare Lösungsmittel. Beispielhaft seien genannt: Monoalkohole wie Methanol, Ethanol oder Propanol, höhere Alkohole wie Ethylenglykol oder Polyetherpolyole und Etheralkohole wie n-Butylglykol oder Methoxypropanol. Ein bevorzugtes Gemisch von Wasser mit organischen Lösemitteln umfasst mindestens 75 Gew. %, besonders bevorzugt mindestens 85 Gew.-% und ganz besonders bevorzugt mindestens 95 Gew.-% Wasser. Die Angaben beziehen sich jeweils auf die Gesamtmenge der zur Herstellung der betreffenden Formulierung verwendeten Lösemittel.

Copolymer (A) kann man in Lösemittel bzw. Lösemittelgemisch lösen, emulgieren oder dispergieren. Bevorzugt setzt man zur Durchführung des erfindungsgemäßen Verfahrens eine Dispersion von Copolymer (A) ein. Die Konzentration von Copolymer (A) kann beispielsweise 0,1 bis 40 Gew.-%, bevorzugt 1 bis 30 Gew.-% und besonders bevorzugt 3 bis 25 Gew.-% betragen. Die vorstehend genannten Mengenangaben beziehen sich auf die Summe aller Komponenten der Formulierung. Bevorzugt formuliert man Copolymer (A) in Wasser als einzigem Lösemittel, und die Konzentration von Copolymer (A) liegt im Bereich von 0,5 bis 40 Gew. %.

Man kann auch Gemische zweier oder mehrerer verschiedener Copolymere (A) einsetzen.

Die erfindungsgemäße Formulierung kann über die genannten Komponenten Lösemittel und Copolymer (A) hinaus noch weitere Komponenten umfassen. Hierbei kann es sich beispielsweise um anorganische oder organische Säuren handeln. Weitere optional verwendete Komponenten umfassen oberflächenaktive Verbindungen (Dispergiermittel, Emulgiermittel, Tenside), Tenside, Korrosionsinhibitoren wie beispielsweise Antioxidantien, hydrotrope Mittel, Gefrierschutzmittel, Biozide, Komplexbildner, Trägerstoffe, Wachse, Metallsalze, Basen und weitere, von erfindungsgemäßem Copolymer verschiedene Polymere. Dabei kann eine Komponente mehr als nur eine Funktion haben.

Beispielhaft zu nennende oberflächenaktive Verbindungen sind Tenside, Emulgiermittel und/oder Dispergiermittel, die kationisch, anionisch, zwitterionisch oder nichtionisch sein können. Geeignete Tenside sind beispielsweise Alkyl- und Alkenylalkoxylate vom Typ R⁶-EOᵥ/PO_{w} wobei R⁶ im allgemeinen lineare oder verzweigte C₆-C₃₀-Alkyl- oder Alkenylreste, bevorzugt C₈-C₂₀-Alkylreste sind und EO für eine Ethylenoxid-Einheit und PO für eine Propylenoxid-Einheit steht, wobei EO und PO in beliebiger Reihenfolge, auch statistisch, angeordnet sein können und v und w gleich oder vorzugsweise verschieden sein können und vorzugsweise ≤ 100 sind mit der Maßgabe, dass v und w nicht gleichzeitig null sind, bevorzugt ist v oder w im Bereich von 3 bis 50. Beispiele für kommerziell erhältliche nichtionische Tenside sind Emulan®, Lutensol® und Plurafac® der BASF Aktiengesellschaft. Weitere Beispiele sind Alkylphenolethoxylate; EO/PO-Blockcopolymere wie etwa EO₇PO₈EO₇. Beispiele für geeignete anionische Tenside sind R⁶EOᵥSO₃Na und R⁶EOᵥSO₃K. Beispiele für geeignete kationische Tenside sind Alkylammoniumsalze, beispielsweise Sulfate oder Halogenide von R⁶N(CH₃)₃, sog. Quats.

Beispielhaft zu nennende Korrosionsinhibitoren sind Butindiol, Benztriazol, Aldehyde, Amincarboxylate, Benztriazole, Derivate des Benztriazols wie Methylenbenztriazol und 2-Mercaptobenztriazol, Amino- und Nitrophenole, Aminoalkohole wie beispielsweise Triethanolamin, Aminobenzimidazol, Imidazoline, Aminoimidazoline, Triazintricarbonsäuren, Aminotriazol, Benzimidazolamine, Benzothiazole, Borsäureester mit Alkanolaminen wie beispielsweise Borsäurediethanolaminester, Carbonsäuren und ihre Ester, Chinolinderivate, Dibenzylsulfoxid, Dicarbonsäuren und ihre Ester, Diisobutenylbernsteinsäure, Dithiophosphonsäure, Fettamine und Fettsäureamide, Guanidin und Guanidinderivate, Harnstoff und Harnstoffderivate, Laurylpyridiniumchlorid, Maleinsäureamide, Mercaptobenzimidazol, N-2-Ethylhexyl-3-aminosulfopropionsäure, Phosphoniumsalze, Phthalsäureamide, Amin- und Natrium- neutralisierte Phosphorsäuremono- und Diester von C₁-C₂₀-Alkylalkoholen sowie die entsprechenden Phosphorsäureester selbst, Phosphorsäureester von Polyalkoxylaten und insbesondere von Polyethylenglykol, Polyetheramine, Sulfoniumsalze, Sulfonsäuren wie beispielsweise Methansulfonsäure, Thioether, Thioharnstoffe, Thiuramidsulfide, Zimtsäure und ihren Derivaten, Zinkphosphate und -silikate, Zirkonphosphate und -silikate. Korrosionsinhibitoren werden - falls sie in erfindungsgemäßen Zusammensetzungen eingesetzt werden - in einer Menge von im allgemeinen 0,01 bis 50 g/l, bevorzugt 0,1 bis 20 g/l, besonders bevorzugt 1 bis 10 g/l eingesetzt.

Dispergiermittel kann man unstabilisiert oder stabilisiert mit einem oder mehreren Verdickungsmittel einsetzen. Geeignete Verdickungsmittel sind beispielsweise unmodifizierte oder modifizierte Polysaccharide vom Xanthan-, Alginat-, Guar- oder Cellulosetyp. Besonders geeignete modifizierte Polysaccharide sind Methylcellulose und Carboxymethylcellulose.

Beispielhaft zu nennende hydrotrope Mittel sind Harnstoff und Natriumxylolsulfonat.

Beispielhaft zu nennende Gefrierschutzmittel sind Ethylenglykol, Propylenglykol, Diethylenglykol, Glycerin und Sorbit.

Beispielhaft zu nennende Biozide sind 2-Brom-2-nitropropan-1,3-diol, Glutaraldehyd, Phenoxyethanol bzw. -propanol, Glyoxal, 2,4-Dichlorbenzylalkohol, Chloracetamid, Formalin, 1,2-Benzisothiazolin-3-on, Silber und Polyvinylpyrrolidon-Jod.

Beispielhaft zu nennende Komplexbildner sind beispielsweise Nitrilotriessigsäure, Ethylendiamintetraessigsäure, Methylglycindiessigsäure, Diethylenpentaminpentaessigsäure sowie deren jeweilige Salze, insbesondere Alkalimetallsalze.

Geeignete Trägerstoffe sind Polycarbonsäuren, beispielsweise Poly(meth)acrylsäure oder Polymaleinsäure, gegebenenfalls partiell oder vollständig neutralisiert, partiell oder vollständig hydrolysiertes Polyacrylnitril, Polyacrylamid, Copolymere von Polyacrylamid, Ligninsulfonsäure und deren Salze, Stärke, Stärkederivate (z. B. oxidierte Stärke), Cellulose, C₁-C₁₀-Alkylphosphonsäure, 1-Aminoalkyl-1,1-Diphosphonsäure.
Beispielhaft zu nennende Metallsalze sind Phosphate. Dabei kann es sich um gelöste oder partikuläre Phosphate handeln. Beispielsweise kann es sich um Orthophosphate, Hydrogenphosphate, Dlhydrogenphosphate oder um Diphosphate handeln. Beispiele gegeigneter Phosphate umfassen Zn₃(PO₄)₂, Zn(H₂PO₄)₂, Mg₃(PO₄)₂ oder Ca(H₂PO₄)₂ bzw. entsprechende Hydrate davon.

Beispielhaft zu nennende Säuren sind Phophorsäure, Phosphorige Säuren, Methanphosphonsäure, Phosphonsäure.

Beispielhaft zu nennende von Copolymer (A) verschiedene Polymere sind Polyacrylate, Polyurethane, Polyamide, jeweils bevorzugt in wassergelöster oder in Wasser dispergierter Form.

In einer besonders bevorzugten Ausführungsform enthält erfindungsgemäße Formulierung mindestens ein dispergiertes Wachs. Der Begriff "Wachs" ist dem Fachmann bekannt und beispielsweise in Römpp Lexikon der Chemie, Stichwort "Lacke und Druckfarben", Georg Thieme Verlag, Stuttgart, New York 1998, S. 615/616 oder Ullmann's Encyclpedia, 6. Auflage, Stichwort Waxes; 1.2. Definition" definiert und umfasst fluorierte wachsartige Substanzen wie beispielsweise sogenannte PTFE-Wachse (siehe z.B. Römpp, a.a.O. Seiten 466/467).

Bevorzugte Wachse sind oligo- oder polymere Substanzen, die ein Molekulargewicht M_{w} von 1.000 bis 100.000 g/mol, besonders bevorzugt 2.000 bis 30.000 g/mol aufweisen.

In einer Ausführungsform der vorliegenden Erfindung weisen bevorzugte Wachse einen Gewichtsanteil von insgesamt mindestens 50 Gew.-% an Strukturelementen auf, ausgewählt aus der Gruppe von (-CH₂-CH₂-), (-CH₂-CH<), (-CH₂-CH(CH₃)-), (CH₃), [C(R⁷)₂-C(R⁷)₂] und [C(R⁷)₂-(R⁷)(C(R⁷)₃)], wobei R⁷ gleich oder verschieden sein können und für H oder F stehen, und mit der Maßgabe, dass die genannten Strukturelemente so miteinander verbunden sind, dass sie überwiegend Einheiten von wenigstens 12 direkt miteinander verknüpften Kohlenstoffatomen umfassen. Selbstverständlich kann eine Mischung verschiedener Wachse eingesetzt werden.

Wachse können auch Säurefunktionen aufweisen, insbesondere Carbonsäuregruppen, die neutralisiert oder unneutralisiert vorliegen können. Wachse mit einer Säurezahl ≤ 200 mg KOH/g, bestimmt nach DIN 53402, sind bevorzugt. Besonders bevorzugt sind Wachse mit einer Säurezahl im Bereich von 10 bis 190 mg KOH/g. Wachse, die einen Schmelzpunkt aufweisen, sind bevorzugt. Besonders bevorzugt sind Wachse mit einem Schmelzpunkt von 40 bis 150°C. Insbesondere sind Wachse mit einem Schmelzpunkt im Bereich von 50 bis 120°C bevorzugt.

Beispiele besonders geeigneter Wachse zur Ausführung der vorliegenden Erfindung umfassen [CAS-Nummern in eckigen Klammern]:
Polyethylenwachs [9002-88-4],
Paraffinwachs [8002-74-2],
Montanwachs und Montanwachsraffinate, beispielsweise [8002-53-7],
Polyethylen-Polypropylenwachse,
Polybutenwachse,
Fischer-Tropsch-Wachse,
Carnaubawachs,
oxidierte Wachse, beispielsweise oxidiertes Polyethylenwachs entsprechend [68441-17-8],
copolymere Polyethylenwachse, beispielsweise Copolymere des Ethylens mit Acrylsäure, Methacrylsäure, Maleinsäureanhydrid, Vinylacetat, Vinylalkohol beispielsweise [38531-18-9], [104912-80-3], [219843-86-4] oder Copolymere des Ethylens mit mehreren der vorstehend genannten Monomere,
polare modifizierte Polypropylenwächse, beispielsweise [25722-45-6],
mikrokristalline Wachse, beispielsweise mikrokristalline Paraffinwachse [63231-60-7], Montansäuren, beispielsweise [68476-03-9],
Metallsalze von Montansäuren, beispielsweise Natriumsalze [93334-05-5] und Calciumsalze [68308-22-5],
Ester langkettiger Carbonsäuren mit langkettigen Alkoholen, beispielsweise Stearinsäure-n-octadecylester [2778-96-3],
Montansäureester mehrwertiger Alkohole, beispielsweise Montanwachsglyceride [68476-38-0], auch teilverseift, Montansäureester des Trimethylolpropans [73138-48-4], auch teilverseift, Montansäureester des 1,3-Butandiols [73138-44-0], auch teilverseift, Montansäureester des Ethylenglykols [73138-45-1], auch teilverseift, Montanwachsethoxylate, beispielsweise [68476-04-0],
Fettsäureamide, beispielsweise Erucamid [112-84-5], Oleamid [301-02-0] und 1,2-Ethylenebis(stearamid) [110-30-5]
langkettige Ether, beispielsweise n-Octadecylphenylether

Des Weiteren sind Mischungen von Wachsen geeignet, beispielsweise
- Mischungen aus Stearinsäure-n-octadecylester und teilverseiften Montansäureestern mehrwertiger Alkohole
- Mischungen aus Paraffinwachsen und teilverseiften Montansäureestern mehrwertiger Alkohole und/oder Montansäuren
- Mischungen aus Polyethylenwachs und Polyethylenglykol

Besonders bevorzugte Wache sind solche, die sich besonders einfach in erfindungsgemäße Formulierung einarbeiten lassen, wie beispielsweise mikronisierte Wachse und/oder Wachsdispersionen.

Mikronisierte Wachse im Sinne der vorliegenden Erfindung sind besonders feinteilige Pulver mit einem mittleren Partikeldurchmesser bevorzugt unter 20 µm, besonders bevorzugt 2 bis 15 µm. Wachsdispersionen sind wässrige Zubereitungen von Wachsen, die Wasser, optional weitere, mit Wasser mischbare Lösemittel, sphärische Wachspartikel sowie in der Regel ein oder mehrere Hilfsmittel enthalten. Bevorzugte Wachsdispersionen zum Einsatz bei der vorliegenden Erfindung weisen einen mittleren Partikeldurchmesser unter 1 µm auf, bevorzugt 20 bis 500 nm, besonders bevorzugt 50 bis 200 nm. Mikronisierte Wachse und Wachsdispersion sind kommerziell erhältlich.

Hilfsmittel werden in Wachsdispersionen beispielsweise eingesetzt, um die Dispergierbarkeit des Wachses und dessen Lagerstabilität zu gewährleisten. Bei Hilfsmitteln kann es sich beispielsweise um Basen zur Neutralisation oder Teilneutralisation von Säurefunktionen im Wachs handeln, beispielsweise Alkalimetallhydroxide, Ammoniak, Amine oder Alkanolamine. Säuregruppen können auch mit Kationen, beispielsweise Ca⁺⁺ oder Zn⁺⁺ neutralisiert oder teilneutralisiert sein. Weiterhin kann es sich um grenzflächenaktive Substanzen handeln, bevorzugt um nichtionische Tenside oder anionische Tenside. Beispiele nichtionischer Tenside umfassen Ethoxylate und Propoxylate auf Basis Alkoholen und Hydroxyaromaten sowie deren Sulfatierungs- und Sulfonierungsprodukte. Beispiele anionischer Tenside umfassen Alkylsulfonate, Arylsulfonate sowie Alkylarylsulfonate.

Zur Ausführung der vorliegenden Erfindung insbesondere geeignet sind Wachsdispersionen mit einem pH-Wert im Bereich von 8 bis 11.

Erfindungsgemäß wird Wachs in einer Menge von 0,01 bis 60 Gew.-%, bevorzugt 0,1 bis 40 Gew.-%, besonders bevorzugt 0,25 bis 20 Gew.-%, ganz besonders bevorzugt 0,5 bis 15 Gew. % und noch mehr bevorzugt bis 10 Gew. % eingesetzt, jeweils bezogen auf gesamte erfindungsgemäße Formulierung.

In einer Ausführungsform der vorliegenden Erfindung enthalten erfindungsgemäße Formulierungen insgesamt im Bereich von 0,01 bis 600 g/l, bevorzugt 0,1 bis 100 g/l Zusatzstoff(e).

Die Dauer der Behandlung mit Copolymer (A) kann im Bereich von deutlich weniger als eine Sekunde bis zu mehreren Minuten betragen, beispielsweise im Bereich von 0,1 Sekunden bis 10 Minuten. Beim kontinuierlichen Verfahren hat es sich besonders bewährt, die zu behandelnde Oberfläche mit Copolymer (A) für eine Dauer von 1 bis 60 Sekunden in Kontakt zu bringen.

In einer speziellen Ausführungsform der vorliegenden Erfindung formuliert man Copolymer (A) in einen Pulverlack ein und bringt es nach einem Verfahren der Pulverlackbeschichtung (engl. Powder coating) auf die erfindungsgemäß zu behandelnde Oberfläche auf.

Wünscht man das erfindungsgemäße Beschichten durch Tauchen zu bewirken, so erfolgt das Beschichten bei einer Temperatur des betreffenden Tauchbads im Bereich von 15 bis 90°C, bevorzugt 25 bis 80°C und besonders bevorzugt 30 bis 60°C. Dazu kann man das Tauchbad, das Copolymer (A) enthaltende Formulierung umfasst, heizen. Wünscht man erfindungsgemäß Gegenstände zu beschichten, die eine Metalloberfläche aufweisen, kann man eine erhöhte Temperatur auch automatisch einstellen, indem man das betreffende warme Metall in das Tauchbad, das Copolymer (A) enthaltende Formulierung umfasst, eintaucht.

Wünscht man das erfindungsgemäße Verfahren durch Sprühen, Spritzen, Streichen, Rakeln, Walzen oder elektrophoretisches Lackieren durchzuführen, so kann man vorzugsweise bei einer Temperatur im Bereich von 15 bis 40°C, bevorzugt 20 bis 30°C arbeiten.

Das erfindungsgemäße Verfahren kann man diskontinuierlich oder bevorzugt kontinuierlich ausführen. Bei einem diskontinuierlichen Verfahren kann es sich beispielsweise um ein Tauchverfahren für Stückgut handeln, bei dem das Stückgut an Gestellen aufgehängt sein oder in perforierten Trommeln als lose Ware vorliegen kann. Ein kontinuierliches Verfahren eignet sich insbesondere zum Behandeln von Bandmetallen. Das Bandmetall wird hierbei durch eine Wanne oder eine Sprühvorrichtung mit einer Formulierung, die Copolymer (A) enthält, sowie optional durch weitere Vor- oder Nachbehandlungsstationen gefahren.

Nach dem eigentlichen Aufbringen von Copolymer (A) trocknet man. Das Trocknen kann bei Raumtemperatur durch einfaches Verdampfen an Luft bei Raumtemperatur erfolgen.

Das Trocknen kann man auch durch geeignete Hilfsmittel und/oder Hilfsmaßnahmen unterstützen, beispielsweise durch Erwärmen und/oder durch Überleiten von Gasströmen, insbesondere Luftströmen, insbesondere durch Trocknen in einem Trockenkanal. Das Trocknen kann auch durch IR-Strahler unterstützt werden. Bewährt hat sich zum Trocknen eine Temperatur von 40°C bis 160°C, bevorzugt 50°C bis 150°C und besonders bevorzugt 70°C bis 130°C. Gemeint ist die Temperatur auf der Polymer- bzw. Metalloberfläche; die Trocknertemperatur muss man gegebenenfalls höher einstellen.

Vor dem eigentlichen Trocknen kann man zum Entfernen überschüssiger Formulierung den Gegenstand mit der erfindungsgemäß mit Copolymer (A) beschichteten Oberfläche abtropfen lassen. Wenn es sich bei dem Gegenstand mit erfindungsgemäß mit Copolymer (A) beschichteten Oberfläche um Bleche oder Metallfolien handelt, so lässt sich überschüssige Formulierung beispielsweise abquetschen oder abrakeln.

Es ist möglich, die Oberfläche nach der erfindungsgemäßen Behandlung, aber vor dem Trocknen mit einer Reinigungsflüssigkeit, insbesondere mit Wasser, nachzuspülen, um überschüssige Reste der eingesetzten Formulierung von der erfindungsgemäß behandelten Oberfläche zu entfernen. Danach trocknet man.

Es ist auch möglich, das Trocknen nach Art eines so genannten "No-rinse" Prozesses durchzuführen. Unmittelbar nach dem Aufbringen von Copolymer (A) enthaltender Formulierung trocknet man sie ohne vorheriges Abspülen in einem Trockenofen ein.

Durch die erfindungsgemäße Behandlung von Oberflächen mit Copolymer (A) werden zumindest Anteile von Copolymer (A) sowie gegebenenfalls weitere Komponenten der Formulierung von der Oberfläche des Polymers oder Metalls chemisorbiert und/oder reagieren mit der Oberfläche, so dass eine feste Bindung zwischen Oberfläche und Copolymer (A) zustande kommt.

Erfindungsgemäß beschichtete Oberflächen kann man in prinzipiell bekannter Art und Weise mit einer oder mehreren übereinander aufgebrachten Lackschichten versehen. Beispielsweise kann es sich um farb- oder effektgebende Lackschichten handeln. Typische Lacke, deren Zusammensetzung sowie typische Schichtfolgen bei mehreren Lackschichten sind an sich bekannt. Man beobachtet, dass die erfindungsgemäß aufgebrachte Beschichtung mit handelsüblichen Lacken in vielen Fällen gut überlackierbar ist.

In einer Ausführungsform der vorliegenden Erfindung bringt man auf die gegebenenfalls vorbehandelte Oberfläche, die man zu beschichten wünscht, vor dem eigentlichen Beschichten einen sogenannten Primer auf. Beispielhaft zu nennende Primer sind Polyamine und Polyethylenimine. Danach beschichtet man mit Copolymer (A), wie vorstehend beschrieben. Dabei stellt man bevorzugt eine Schichtdicke von Copolymer (A) im Bereich von ≥ 4 µm bis 100 µm ein. Danach kann man mit einer oder mehreren Lackschichten versehen.

In einer anderen Ausführungsform der vorliegenden Erfindung bringt man Copolymer (A) als Primer auf, beispielsweise mit einer Schichtdicke im Bereich von 50 nm bis 50 µm, bevorzugt 100 nm bis 10 µm, ganz besonders bevorzugt von 300 nm bis 3 µm. Danach kann man eine oder mehrere Lackschichten aufbringen.

In einer anderen Ausführungsform der vorliegenden Erfindung bringt man Copolymer (A) als Lack oder Bestandteil eines Lacks auf, vorzugsweise auf eine nicht vorbehandelte Oberfläche aus Metall. In dieser Ausführungsform ist eine Schichtdicke von Copolymer (A) im Bereich von 100 nm bis 3 µm bevorzugt.

Ein weiterer Gegenstand der vorliegenden Erfindung sind Polymer- oder Metalloberflächen, Polymer- oder Metalloberfläche, beschichtet mit Copolymer (A), das als Comonomere einpolymerisiert enthält:
(a) Ethylen,
(b) einen oder mehrere Alkenylphosphonsäurediester,
(c) gegebenenfalls ein oder mehrere weitere radikalisch copolymerisierbare Comonomere.

Ein weiterer Gegenstand der vorliegenden Erfindung sind Gegenstände mit mindestens einer erfindungsgemäßen Oberfläche.

Erfindungsgemäße Oberflächen und demgemäß Gegenstände mit erfindungsgemäßen Oberflächen weisen einen besonders guten Korrosionsschutz auf, beispielsweise eine verbesserte oxidative Korrosionsstabilität gegenüber festen, flüssigen und gasförmigen oxidierend wirkenden Medien.

Ein weiterer Gegenstand der vorliegenden Erfindung sind wässrige Formulierungen, beispielsweise wässrige Lösungen, wässrige Emulsionen und insbesondere wässrige Dispersionen, enthaltend 0,01 bis 40 Gew.-% Copolymer (A), das als Comonomere einpolymerisiert enthält:
(a) Ethylen,
(b) einen oder mehrere Alkenylphosphonsäurediester,
(c) gegebenenfalls ein oder mehrere weitere radikalisch copolymerisierbare Comonomere.

Ein spezieller Gegenstand der vorliegenden Erfindung sind Copolymere (A'), die als Comonomere einpolymerisiert enthalten:
(a) Ethylen,
(b) einen oder mehrere Alkenylphosphonsäurediester,
(c) gegebenenfalls ein oder mehrere weitere radikalisch copolymerisierbare Comonomere,
(c') mindestens ein Comonomer, gewählt aus ethylenisch ungesättigten Carbonsäuren und ethylenisch ungesättigten C₄-C₁₀-Dicarbonsäuren und deren Anhydriden.

In einer Ausführungsform der vorliegenden Erfindung handelt es sich bei erfindungsgemäßen Copolymeren (A') um solche, die als Comonomere einpolymerisiert enthalten
(a) 50 bis 99,8 Gew.-%, bevorzugt 55 bis 98 Gew.-% Ethylen,
(b) 0,1 bis 49,9 Gew.-%, bevorzugt 1 bis 40 Gew.-% einen oder mehrere Alkenylphosphonsäurediester,
(c) 0,1 bis 49,9 Gew.-%, bevorzugt 1 bis 40 Gew.-% gegebenenfalls ein oder mehrere weitere radikalisch copolymerisierbare Comonomere,
(c') 0,1 bis 49,9 Gew.-%, bevorzugt 1 bis 40 Gew.-% mindestens ein Comonomer, gewählt aus ethylenisch ungesättigten Carbonsäuren und ethylenisch ungesättigten C₄-C₁₀-Dicarbonsäuren und deren Anhydriden.

Dabei sind-Angaben-in-Gew.-% jeweils auf gesamtes erfindungsgemäßes Copolymer (A') bezogen.

Dabei können erfindungsgemäße Copolymere (A') bezüglich einpolymerisierter ethylenisch ungesättigter Carbonsäure und/oder ethylenisch ungesättigter C₄-C₁₀-Dicarbonsäure als freie Säure vorliegen oder partiell oder vollständig neutralisiert sein, beispielsweise mit Alkalimetall wie z. B. Natrium oder Kalium oder mit Erdalkalimetall wie beispielsweise Magnesium oder Calcium oder mit Ammoniak oder organischem Amin, insbesondere C₁-C₄-Monoalkylamin, Di-C₁-C₄-alkylamin, Tri-C₁-C₄-alkylamin oder Tetra-C₁-C₄-alkylammonium neutralisiert sein. Auch kann gegebenenfalls einpolymerisiertes Anhydrid von ethylenisch ungesättigter C₄-C₁₀-Dicarbonsäure in hydrolysierter Form vorliegen.

In einer Ausführungsform der vorliegenden Erfindung sind bis zu 90 mol-%, bevorzugt bis zu 75 mol-% der Carbonsäuregruppen von erfindungsgemäßem Copolymer (A') mit Hydroxyalkylammonium insbesondere der Formel
(C₁-C₄-Alkyl)ₓ(C₂-C₄-ω-Hydroxyalkyl)_{y}NH_{4-x-y} neutralisiert, wobei
x eine ganze Zahl im Bereich von null bis drei, bevorzugt null oder eins,
y eine ganze Zahl im Bereich von eins bis vier
ist mit der Maßgabe, dass die Summe aus x und y den Wert vier nicht überschreitet.

Bevorzugte Beispiele für C₁-C₄-ω-Hydroxyalkyl sind 3-Hydroxypropyl, 4-Hydroxybutyl und insbesondere 2-Hydroxyethyl, im Folgenden auch als Hydroxyethyl bezeichnet.

Besonders bevorzugte Beispiele für Hydroxyalkylammonium sind N,N-Dihydroxyethylammonium, N-Methyl-N-Hydroxyethylammonium, N,N-Dimethyl-N-hydroxyethylammonium, N-Methyl-N,N-dihydroxyethylammonium, N-n-Butylhydroxyethylammonium, N-n-Butyl-N,N-dihydroxyethylammonium.

Weitere geeignete organische Amine zum Neutralisieren sind beispielsweise Morpholin, Imidazol, Imidazoline, Oxazoline, Triazole und Fettsäurealkanolamine.

Geeignete Mittel zum Neutralisieren sind weiterhin KOH, NaOH, Ca(OH)₂, NaHCO₃, Na₂CO₃, K₂CO₃ und KHCO₃.

Die Herstellung von erfindungsgemäßem Copolymer (A') gelingt beispielsweise nach dem vorstehend beschriebenen Verfahren, wobei darauf zu achten ist, dass man mindestens ein Comonomer, gewählt aus ethylenisch ungesättigten Carbonsäuren und ethylenisch ungesättigten C₄-C₁₀-Dicarbonsäuren und deren Anhydriden, dosieren muss.

Ein weiterer Gegenstand der vorliegenden Erfindung ist somit ein Verfahren zur Herstellung von erfindungsgemäßen Copolymeren (A'), das dadurch gekennzeichnet ist, dass man
(a) Ethylen,
(b) einen oder mehrere Alkenylphosphonsäurediester,
(c) gegebenenfalls ein oder mehrere weitere radikalisch copolymerisierbare Comonomere,
   (c') mindestens ein Comonomer, gewählt aus ethylenisch ungesättigten Carbonsäuren und ethylenisch ungesättigten C₄-C₁₀-Dicarbonsäuren und deren Anhydriden, besonders bevorzugt (Meth)acrylsäure oder Maleinsäure oder Maleinsäureanhydrid,
bei.500 bis 4000 bar und Reaktionstemperaturen im Bereich von 150 bis 300°C miteinander copolymerisiert.

Mit erfindungsgemäßen Copolymeren (A') lässt sich das erfindungsgemäße Verfahren zur Behandlung von Oberflächen besonders gut ausführen.

### Arbeitsbeispiele

### I. Herstellung von Copolymeren (A) und von erfindungsgemäßen Copolymeren (A') I.1 Herstellung von Copolymer (A.1) bis (A.7)

In einem Hochdruckautoklaven, wie er in der Literatur beschrieben ist (M. Buback et al., Chem. Ing. Tech. 1994,66,510), wurden Ethylen, die in Tabelle 1 angegebene Menge Vinylphosphonsäuredimethylester I.1 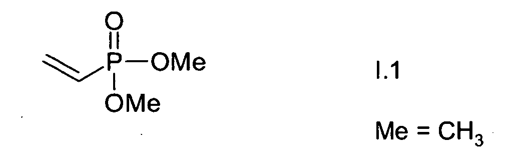 entweder in Substanz oder als Lösung in Toluol (Konzentration s. Tabelle 1) Methacrylsäure (Tabelle 1) copolymerisiert. Dazu wurde Ethylen (10,0 bzw. 12,0 kg/h) unter dem Druck von 1700 bar kontinuierlich in den Hochdruckautoklaven eingespeist. Vinylphosphonsäuredimethylester wurde mit Hilfe einer Hochdruckpumpe unter dem Druck von 1700 bar in den Hochdruckautoklaven kontinuierlich dosiert. Getrennt davon wurde die in Tabelle 1 angegebene Menge Methacrylsäure mit einem Kompressor zunächst auf einen Zwischendruck von 260 bar verdichtet und anschließend mit Hilfe eines weiteren Kompressors unter dem Reaktionsdruck von 1700 bar in den Hochdruckautoklaven kontinuierlich eingespeist. Getrennt davon wurde die in Tabelle 1 angegebene Menge Initiatorlösung, bestehend aus tert.-Amylperoxypivalat (in Isododekan, Konzentration siehe Tabelle 1), unter dem Reaktionsdruck von 1700 bar in den Hochdruckautoklaven kontinuierlich eingespeist. Getrennt davon wurde die in Tabelle 1 angegebene Menge Propionaldehyd (in Substanz oder als Lösung in Isododekan, Konzentration siehe Tabelle 1) mit einem Kompressor zunächst auf einen Zwischendruck von 260 bar verdichtet und anschließend mit Hilfe eines weiteren Kompressors unter dem Reaktionsdruck von 1700 bar in den Hochdruckautoklav kontinuierlich eingespeist. Die Reaktionstemperatur betrug etwa 220°C. Man erhielt Vorstufen-Copolymer mit den aus Tabelle 2 ersichtlichen analytischen Daten.

In den Beispielen (A.6) und (A.7) wurde ein Rohrreaktor verwendet, wie er in EP 0 101 343 beschrieben ist (Länge: 595 m, Innendurchmesser: 15/21 mm) mit einem Verhältnis Länge/Durchmesser von ca. 35.000 und drei Stellen zur Dosierung des tert.-Amylperoxypivalats. Der Reaktionsverlauf wird durch die Maximaltemperaturen hinter den Stellen, an denen tert.-Amylperoxypivalat dosiert wird, charakterisiert. T6: 228/225/224 °C, T7: 219/226/225 °C.

### 1.2 Herstellung von erfindungsgemäßen Copolymeren (A')

In einem Hochdruckautoklaven, wie er in der Literatur beschrieben ist (M. Buback et al., Chem. Ing. Tech. 1994, 66, 510), wurden Ethylen, die in Tabelle 3 angegebene Menge Vinylphosphonsäuredimethylester I.1 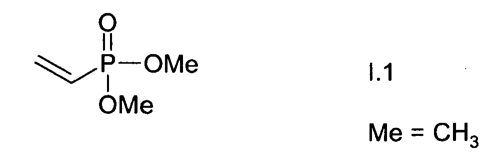 entweder in Substanz oder als Lösung in Toluol (Konzentration s. Tabelle 3) und Methacrylsäure (Tabelle 3) copolymerisiert. Dazu wurde Ethylen (10,0 kg/h) unter dem Reaktionsdruck von 1700 bar in den Hochdruckautoklaven kontinuierlich eingespeist. Vinylphosphonsäuredimethylester wurde mit Hilfe einer Hochdruckpumpe unter dem Reaktionsdruck von 1700 bar in den Hochdruckautoklaven kontinuierlich eingespeist. Getrennt davon wurde die in Tabelle 3 angegebene Menge Methacrylsäure mit einem Kompressor zunächst auf einen Zwischendruck von 260 bar verdichtet und anschließend mit Hilfe eines weiteren Kompressors unter dem Reaktionsdruck von 1700 bar in den Hochdruckautoklaven kontinuierlich eingespeist. Getrennt davon wurde die in Tabelle 3 angegebene Menge Initiatorlösung, bestehend aus tert.-Amylperoxypivalat (in Isododekan, Konzentration siehe Tabelle 3), unter dem Reaktionsdruck von 1700 bar in den Hochdruckautoklaven kontinuierlich eingespeist. Getrennt davon wurde die in Tabelle 3 angegebene Menge Propionaldehyd (in Substanz oder als Lösung in Isododekan, Konzentration siehe Tabelle 3) mit einem Kompressor zunächst auf einen Zwischendruck von 260 bar verdichtet und anschließend mit Hilfe eines weiteren Kompressors unter dem Reaktionsdruck von 1700 bar in den Hochdruckautoklaven kontinuierlich eingespeist. Die Reaktionstemperatur betrug etwa 220°C. Man erhielt erfindungsgemäßes Copolymer mit den aus Tabelle 4 ersichtlichen analytischen Daten.

**Tabelle 1 Herstellung von Copolymer (A.1) - (A.7)**

| Nr. | T_{Reaktor} [°C] | Ethylen [kg/h] | VPD [l/h] | VPD-Lsg. [l/h] | c(VPD) [Vol:-%] | PO in ID [l/h] | c(PO) | PA [l/h] | PA in ID [l/h] | c(PA) [Vol.-%] | Umsatz Ethylen [Gew.-%] | Umsatz VPD [Gew.-%] | Austrag (VCP) [kg/h] |
|---|---|---|---|---|---|---|---|---|---|---|---|---|---|
| (A.1) | 219 | 10 | - | 0,77 | 50 | 2,02 | 0,02 | 0,41 | - | 100 | 18 | 66 | 2.1 |
| (A.2) | 217 | 10 | - | 0,77 | 50 | 1,83 | 0,02 | - | 0,54 | 20 | 18 | 75 | 2.1 |
| (A.3) | 221 | 10 | 0,79 | - | - | 1,26 | 0,02 | 0,53 | - | 100 | 20 | 68 | 2,6 |
| (A.4) | 217 | 10 | 0,79 | - | - | 1,07 | 0,02 | - | 0,55 | 20 | 19 | 67 | 2,5 |
| (A.5) | 219 | 12 | 0,85 | - | - | 1,29 | 0,02 | - | 0,29 | 11 | 13 | 50 | 2,1 |
| (A.6) | T6 | 3200 | 140 | - | - | 17 | 0,5 | 2,9 | - | 100 | 23 | 98 | 870 |
| (A.7) | T7 | 3200 | 230 | - | - | 16 | 0,5 | 3,2 | - | 100 | 21 | 97 | 900 |

| | | | | | | | | | | | | | |
|---|---|---|---|---|---|---|---|---|---|---|---|---|---|
| Unter T_{Reaktor} ist die maximale Innentemperatur des Hochdruckautoklaven zu verstehen. Abkürzungen: VPD: Vinylphosphonsäuredimethylester, ID: Isododekan (2,2,4,6,6-Pentamethylheptan), PO: tert.-Amylperoxypivalat c(PO): Konzentration von PO in ID in mol/l, c(PA): Konzentration von PA in ID in Vor.-%, 100 Vol.-% entsprechen reinem PA, c(VPD): Konzentration von VPD in Toluol in Gew.-% VCP: Vorstufen-Copolymer | | | | | | | | | | | | | |

**Tabelle 2: Analytische Daten von Copolymer (A.1) - (A.7)**

| Nr. | Gehalt Ethylen [Gew.-%] | Gehalt VPD [Gew.-%] | Gehalt MAS [Gew.-%] | Gehalt Ethylen [mol-%] | Gehalt VPD [mol-%] | Gehalt MAS [mol-%] | Säurezahl [mg KOH/g] | v/mm²/s | Tₘₑₗₜ [°C] | ρ [g/cm³] |
|---|---|---|---|---|---|---|---|---|---|---|
| (A.1) | 86,1 | 13,9 | - | 96,8 | 3,2 | - | - | 285 | 100,1 | 0,9438 |
| (A.2) | 84,2 | 15,8 | - | 96,3 | 3,7 | - | - | 5.300 | 99,6 | 0,9439 |
| (A.3) | 76,4 | 23,6 | - | 94,0 | 6,0 | - | - | 220 | 73,9 | 0.9614 |
| (A.4) | 75,6 | 24,4 | - | 93.8 | 6,2 | - | - | 5.000 | 89,0 | 0,9631 |
| (A.5) | 77,0 | 23,0 | - | 94,2 | 5,8 | - | - | 26.900 | n.b. | n.b. |
| (A.6) | 84,2 | 15,8 | - | 96.3 | 3,7 | - | - | 5.300 | 99,5 | 0,9439 |
| (A.7) | 75,5 | 24,5 | - | 93,7 | 6.3 | - | - | 5.400 | 91,3 | 0,9636 |

| | | | | | | | | | | |
|---|---|---|---|---|---|---|---|---|---|---|
| Die Dichte wurde bestimmt nach DIN 53479. Der Schmelzpunkt bzw. Schmelzbereich Tₘₑₗₜ wurde durch DSC (Differential scanning calorimetry) nach DIN 51007 bestimmt. | | | | | | | | | | |

**Tabelle 3: Herstellung von erfindungsgemäßen Copolymeren (A'.1) bis (A'.5)**

| Nr. | T_{max.} [°C] | E [kg/h] | VPD [l/h] | VPD-Lsg. [l/h] | c(VPD) [Vol.-%] | MAS [l/h] | PA [l/h] | PA Lsg. [l/h] | c(PA) [Vol.-%] | PO in ID [l/h] | c(PO) [mol/l] | Umsatz Ethylen [Gew.-%] | Umsatz VPD [Gew.-%] | Umsatz MAS [Gew.-%] | Austrag (VCP) [kg/h] |
|---|---|---|---|---|---|---|---|---|---|---|---|---|---|---|---|
| (A'.1) | 221 | 10 | - | 0,58 | 33 | 0,95 | 0,69 | -- | - | 1,48 | 0,06 | 17 | 55 | 72 | 2,5 |
| (A'.2) | 220 | 10 | - | 0,56 | 33 | 0,85 | - | 0,93 | 33 | 1,35 | 0,06 | 19 | 64 | 86 | 2,8 |
| (A'.3) | 224 | 10 | - | 0,75 | 33 | 0,75 | 0,38 | -- | - | 1,23. | 0,05. | 18 | 49 | 80 | 2,6 |
| (A'.4) | 220 | 10 | 0,53 | - | - | 0,55 | 0,37 | -- | - | 1,14 | 0,04 | 17 | 62 | 85 | 2,6 |
| (A'.5) | 220 | 10 | 0,81 | - | - | 0,38 | 0,40 | -- | - | 1,29 | 0,03 | 16 | 60 | 79 | 2,5 |

| | | | | | | | | | | | | | | | |
|---|---|---|---|---|---|---|---|---|---|---|---|---|---|---|---|
| MAS: Methacrylsäure | | | | | | | | | | | | | | | |

**Tabelle 4: Analytische Daten von erfindungsgemäßen Copolymeren (A'.1) bis (A'.5)**

| Nr. | Gehalt Ethylen [Gew.-%] | Gehalt VPD [Gew.-%] | Gehalt MAS [Gew.-%] | Gehalt Ethylen [mol-%] | Gehalt VPD [mol-%] | Gebalt MAS [mol-%] | v/mm²/s | Tₘₑₗₜ [°C] | ρ [g/cm³] |
|---|---|---|---|---|---|---|---|---|---|
| (A'.1) | 67,1 | 4,9 | 27,9 | 86,9 | 1,3 | 11,8 | 5.300 | 66,1 | n.b. |
| (A'.2) | 68,6 | 4,9 | 26,5 | 87,7 | 1,3 | 11,0 | 19.800 | 70,4 | n.b. |
| (A'.3) | 71,1 | 5,4 | 23,5 | 89,0 | 1,4 | 9,6 | 5.700 | 70,3 | n.b. |
| (A'.4) | 67,3 | 14,4 | 18,3 | 88.3 | 3,9 | 7,8 | 5.100 | 70,7 | n.b. |
| (A'.5) | 64,9 | 22,2 | 12,9 | 88,1 | 6,2 | 5,7 | 4.800 | 69,5 | n.b. |

| | | | | | | | | | |
|---|---|---|---|---|---|---|---|---|---|
| Der Gehalt an MAS wurde durch Bestimmung der Säurezahl nach DIN 53402 bestimmt. Der Gehalt an Ethylen und VPD wurde durch 1H-NMR-Spektroskopie bestimmt. Der Gehalt an Phosphor wurde für (A'.1) und (A'.5) zusätzlich durch eine Elementaranalyse bestimmt: (A.1') : P = 1,1g /100 g Polymer; das entspricht 4,8 Gew.-% (1,3 mol-%) VPD. (A.5') : P = 4,9 g/100 g Polymer; das entspricht 21,6 Gew.-% (6.0 mol-%) VPD. Die Dichte wurde bestimmt nach DIN 53479. Der Schmelzpunkt bzw. Schmelzbereich Tₘₑₗₜ wurde durch DSC (Differential scanning calorimetry) nach DIN 51007 bestimmt. Weitere Abkürzungen s. oben. | | | | | | | | | |

### II. Herstellung von wässrigen Formulierungen

### II.1 Herstellung von erfindungsgemäßer wässriger Formulierung F.1.1

In einem 1 Liter Rundkolben wurden 100 g Copolymer (A'.1), 380 g Wasser und 9,9 g 25 Gew.-% wässrige Ammoniaklösung (entspricht 45 mol-% NH₃ bzgl. der enthaltenen Carbonsäuregruppen) 2 Stunden bei etwa 95°C gerührt und danach auf Raumtemperatur abgekühlt. Man filtrierte, wobei etwas Feststoff auf dem Filter verblieben. Als Filtrat erhielt man erfindungsgemäße wässrige Formulierung F.1.1.

Ein kleiner Teil des Filtrats wurde zwecks analytischer Untersuchung mit 5 Gew.-% Salzsäure bis zu einem pH-Wert von 2 angesäuert, wobei erfindungsgemäßes Copolymer (A'.1) ausfiel. Erfindungsgemäßes Copolymer (A'.1) wurde abfiltriert, mechanisch zerkleinert, viermal mit Wasser gewaschen und bei 30°C im Vakuum (1 mbar) über einen Zeitraum von 24 Stunden getrocknet. Mittels ¹H-NMR wurde in dieser mit Ammoniak behandelten Probe gegenüber dem unbehandelten Copolymer (A'.1) ein gleicher Anteil an Methoxygruppen identifiziert.

### III. Behandlung von Oberflächen, allgemeine Versuchsbeschreibung

Für die Beispiele und Vergleichsbeispiele wurden Prüfbleche aus Al 99,9, CuZn 37, Zn 99,8, verzinktem Stahl (20µm einseitige Zinkauflage) oder Baustahl St 1.0037 eingesetzt.
Man setzte jeweils eine 5 Gew.-% ethanolische Lösung des betreffenden Copolymers (A) ein. Die ethanolische Lösung von jeweiligem Copolymer (A) wurde homogenisiert und in ein Tauchbad gefüllt. Die vorgereinigten Prüfbleche wurden über die angegebene Zeit eingetaucht und danach bei 80°C bis zur Gewichtskonstanz getrocknet. Abschließend wurden die Ränder der beschichteten Bleche abgeklebt, um bei der Beurteilung Randeffekte auszuschließen.

Die Dicke der Passivierungsschicht wurde durch Differenzwägung vor und nach Einwirken der erfindungsgemäß eingesetzten Zusammensetzung auf die Metalloberfläche und unter der Annahme ermittelt, dass die Schicht eine Dichte von 1 kg/l aufweist. Im Folgenden wird unter "Schichtdicke" immer eine derartig ermittelte Größe verstanden, unabhängig davon, welche Dichte die Schicht tatsächlich aufwies.

Die korrosionsinhibierende Wirkung wurde mittels eines Salzsprühtests in einer Salzsprühnebelatmosphäre nach DIN 50021 ermittelt. Je nach Art der Korrosionsschäden wurde die Standzeit im Korrosionstest unterschiedlich definiert.

Bildeten sich weiße Flecken von im Allgemeinen mehr als 1 mm Durchmesser (Zn-oder Al-Oxid, sogenannter Weißrost), so wurde die Standzeit als die Zeit angegeben, nach der das Schadbild dem Bewertungsgrad 8 in DIN EN ISO 10289 vom April 2001, Anhang B, Seite 19, entspricht.

In den nachfolgenden Beispielen wurden gegebenenfalls folgende Blechvorbehandlungen zur Gewährleistung einer chromfreien Oberfläche gewählt.

### III.1 Vorbehandlung von Prüfblechen, allgemeine Vorschrift

Die Vorbehandlung der Prüfbleche erfolgte nach ISO 8407 materialspezifisch und ist hier für St 1.0037 explizit aufgeführt.

### III.1.1 Entfetten und Entölen bei saurem pH-Wert

Unpassivierte elektrolytisch verzinkte Prüfbleche mit den Abmessungen 50 mm · 20 mm · 1 mm wurden in eine wässrige Reinigungslösung von 0,5 Gew.-% HCl und 0,1 Gew.-% eines mit im Mittel 9 Äquivalenten Ethylenoxid ethoxylierten gesättigten C₁₃-Oxoalkohols getaucht, sofort mit vollentsalztem Wasser abgespült und anschließend durch Überblasen mit Stickstoff getrocknet.

### III.1.2Entfetten bei alkalischem pH-Wert

Ansetzen eines alkalisches Entfettungsbades:
In einer Kunststoffwanne mit zwei flächigen Elektroden (Edelstahl oder Graphit), die eine größere Oberfläche als das jeweilige Prüfblech hatten, wurde eine Lösung eines Entfettungsbads folgender Zusammensetzung eingesetzt:
   20 g NaOH
   22 g Na₂CO₃
   16 g Na₃PO₄·12 H₂O
   1 g EDTA-Na₄
   0,5 g mit im Mittel 9 Äquivalenten Ethylenoxid ethoxylierter gesättigter C₁₃-Oxoalkohol [C₁₃(EO)₉]
   940 ml destilliertes Wasser.

Zur Herstellung des alkalischen Entfettungsbades löste man NaOH, Na₂CO₃ und Na₃PO₄ in destilliertem Wasser nacheinander unter Rühren. Parallel dazu löste man [C₁₃(EO)₉] und EDTA-Na₄ getrennt in destilliertem Wasser vor, wobei dies bei der ED-TA-Na₄-Lösung bei einer Temperatur von 50°C erfolgt. Die wässrigen Lösungen von [C₁₃(EO)₉] und EDTA-Na₄ wurden anschließend zu der NaOH-Na₂CO₃-Na₃PO₄-Lösung in einen Messzylinder gegeben, auf Zimmertemperatur abgekühlt und mit destilliertem Wasser auf 1000 ml aufgefüllt.

Durchführung einer Entfettung bei alkalischem pH-Wert:

Ein Prüfblech mit den Abmessungen 50 mm · 20 mm · 1 mm wurde mit einem Papierlappen abgewischt und bei 10 Volt in das alkalische Entfettungsbad zwischen den Elektroden eingetaucht und als Kathode geschaltet. Die Spannung wurde so justiert, dass die Stromstärke 1 A betrug. Nach zehn Sekunden wurde das Prüfblech aus dem alkalischen Entfettungsbad herausgenommen und fünf Sekunden unter fließendem vollentsalztem Wasser gespült.

### III.2 Prüfvorschrift, allgemeines Vorgehen

Zunächst wurde jeweils eine Vorbehandlung des betreffenden Prüfblechs nach III.1.1 (Cu-Prüfbleche) oder III.1.2 (Stahl-Prüfbleche) durchgeführt.

Im Anschluss wurde das Prüfblech jeweils in eine Prüflösung für 1 bis 30 Sekunden bei Raumtemperatur eingetaucht, danach bei 80°C bis zur Gewichtskonstanz getrocknet und der flächenbezogene Massenaufbau mittels Differenzwägung gravimetrisch bestimmt. Der angegebene Wert ergab sich aus dem Mittelwert aus einzelnen Messungen je 3 verschiedenen Prüfblechen. Die Vorbereitung bzw. Reinigung der Prüfbleche erfolgte nach ISO 8407 materialspezifisch und ist hier für St 1.0037 explizit aufgeführt.

### III.2.1 Versuch mit Copolymer (A.2)

Beschichtung aus (A.2) auf St 1.0037

Man tauchte Prüfbleche einmalig für 10 Sekunden in eine 5 Gew.-% ethanolische Lösung von (A.2).
Schichtdicke: 3,5 µm. Das beschichtete Prüfblech zeigte keine Veränderungen hinsichtlich der Farbe und des metallischen Glanzes im Vergleich mit dem unbehandelten Prüfblech.
Verweilzeit bis zur Beurteilung 8 in einer 5%igen Salzsprühnebelatmosphäre bei 30°C: 10 Stunden.

### III.2.2Versuch mit Copolymer (A.3)

Beschichtung aus (A.3) auf St 1.0037

Man tauchte Prüfbleche einmalig für 10 Sekunden in eine 5 Gew.-% ethanolische Lösung von (A.3).
Schichtdicke: 4 µm.
Das beschichtete Prüfblech zeigte keine Veränderungen hinsichtlich der Farbe und des metallischen Glanzes im Vergleich mit dem unbehandelten Prüfblech.

Verweilzeit bis zur Beurteilung 8 in einer 5%igen Salzsprühnebelatmosphäre bei 30°C: 15 Stunden.

### III.2.3Versuch mit Copolymer (A.6)

Beschichtung aus (A.6) auf St 1.0037

Man tauchte Prüfbleche einmalig für 10 Sekunden in eine 5 Gew.-% ethanolische Lösung von (A.6).
Schichtdicke: 5,5 µm.
Das beschichtete Prüfblech zeigte keine Veränderungen hinsichtlich der Farbe und des metallischen Glanzes im Vergleich mit dem unbehandelten Prüfblech.
Verweilzeit bis zur Beurteilung 8 in einer 5%igen Salzsprühnebelatmosphäre bei 30°C: 18 Stunden.

### Vergleichsbeispiele

### Vergleichsbeispiel V1

### "Nullblech" ohne Beschichtung

Verweilzeit bis zur Beurteilung 8 in einer 5% Salzsprühnebelatmosphäre bei 30°C ist weniger als 1 Stunde.

### Vergleichsbeispiel V2: Passivierungsschicht mit H₃PO₄ (Phosphatierung)

Man tauchte Prüfbleche einmalig für 10 Sekunden in eine wässrige 0,1 bzw. 0,5 oder 1 Gew.-% Phosphorsäure.
Verweilzeit bis zur Beurteilung 8 in einer 5% Salzsprühnebelatmosphäre bei 30°C: jeweils weniger als 2 Stunden.

## Patentansprüche

1. Verwendung von Copolymeren (A), die als Comonomere einpolymerisiert enthalten
(a) Ethylen,
(b) einen oder mehrere Alkenylphosphonsäurediester,
kein weiteres Comonomer oder
(c) ein oder mehrere weitere radikalisch copolymerisierbare Comonomere, gewählt aus ethylenisch ungesättigten Carbonsäuren, ethylenisch ungesättigten C₄-C₁₀-Dicarbonsäuren und deren Anhydriden, (Meth)acrylsäure-C₁-C₁₀-Alkylestern, Ameisensäurevinylester, C₁-C₁₀-Alkylcarbonsäurevinylester, C₁-C₂₀-Alkylvinyl- und allylethern und α-Olefinen mit 3 bis 40 C-Atomen, zur Behandlung von Oberflächen.

2. Verfahren zur Behandlung von Oberflächen unter Verwendung von einem oder mehreren Copolymeren (A), die als Comonomere einpolymerisiert enthalten:
(a) Ethylen,
(b) einen oder mehrere Alkenylphosphonsäurediester,
kein weiteres Comonomer oder
(c) ein oder mehrere weitere radikalisch copolymerisierbare Comonomere, gewählt aus ethylenisch ungesättigten Carbonsäuren, ethylenisch ungesättigten C₄-C₁₀-Dicarbonsäuren und deren Anhydriden, (Meth)acrylsäure-C₁-C₁₀-Alkylestern, Ameisensäurevinylester, C₁-C₁₀-Alkylcarbonsäurevinylester, C₁-C₂₀-Alkylvinyl- und allylethern und α-Olefinen mit 3 bis 40 C-Atomen.

3. Verfahren nach Anspruch 2, **dadurch gekennzeichnet, dass** es sich bei Copolymer (A) um Copolymere mit einem mittleren Molekulargewicht M_{w} im Bereich von 1.000 bis 500.000 g/mol handelt.

4. Verfahren nach einem der Ansprüche 2 oder 3, **dadurch gekennzeichnet, dass** es sich bei Alkenylphosphonsäurediester (b) um eine Verbindung der allgemeinen Formel I handelt, 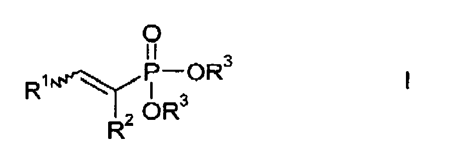 wobei die Variablen wie folgt definiert sind:
R¹ gewählt aus Wasserstoff und unverzweigtem und verzweigtem C₁-C₁₀-Alkyl,
R² gewählt aus Wasserstoff und unverzweigtem und verzweigtem C₁-C₁₀-Alkyl
R₃ gleich oder verschieden und gewählt aus Phenyl, Benzyl und unverzweigtem und verzweigtem C₁-C₁₀-Alkyl, wobei die Reste R³ miteinander unter Bildung eines fünf- bis 10-gliedrigen Rings verbunden sein können.

5. Verfahren nach einem der Ansprüche 2 bis 4, **dadurch gekennzeichnet, dass** R¹ und R² jeweils Wasserstoff bedeuten und die Reste R³ jeweils gleich sind und gewählt aus C₁-C₄-Alkyl.

6. Verfahren nach einem der Ansprüche 2 bis 5, **dadurch gekennzeichnet, dass** man eine Metall- oder Polymeroberfläche, die nicht vorbehandelt oder vorbehandelt sein kann, mit einer Schicht von Copolymer (A) versieht.

7. Verfahren nach einem der Ansprüche 2 bis 5, **dadurch gekennzeichnet, dass** man eine Metall- oder Polymeroberfläche mit einer Lösung von Copolymer (A) benetzt.

8. Verfahren nach einem der Ansprüche 2 bis 7, **dadurch gekennzeichnet, dass** man eine Metall- oder Polymeroberfläche mit einer wässrigen Formulierung von Copolymer (A) behandelt.

9. Verfahren nach einem der Ansprüche 2 bis 8, **dadurch gekennzeichnet, dass** man die Metall- oder Polymeroberfläche nach einem kontinuierlichen Bandverfahren behandelt.

10. Verfahren nach einem der Ansprüche 2 bis 9, **dadurch gekennzeichnet, dass** man eine Metall-oder Polymeroberfläche, die nicht vorbehandelt oder vorbehandelt sein kann, mit einer Schicht von Copolymer (A) und danach mit einem weiteren Beschichtungsmittel versieht.

11. Verfahren nach einem der Ansprüche 2 bis 10, **dadurch gekennzeichnet, dass** weitere radikalische copolymerisierbare Comonomere (c) gewählt werden aus (Meth)acrylsäure, (Meth)acrylsäure-C₁-C₁₀-Alkylester, Ameisensäurevinylester, C₁-C₁₀-Alkylcarbonsäurevinylester, ethylenisch ungesättigten C₄-C₁₀-Dicarbonsäuren und deren Anhydriden, C₁-C₂₀-Alkylvinyl- und allylethern und α-Olefinen mit 3 bis 40 C-Atomen.

12. Polymer- oder Metalloberfläche, beschichtet mit Copolymer (A), das als Comonomere einpolymerisiert enthält:
(a) Ethylen,
(b) einen oder mehrere Alkenylphosphonsäurediester,
kein weiteres Comonomer oder
(c) ein oder mehrere weitere radikalisch copolymerisierbare Comonomere, gewählt aus ethylenisch ungesättigten Carbonsäuren, ethylenisch ungesättigten C₄-C₁₀-Dicarbonsäuren und deren Anhydriden, (Meth)acrylsäure-C₁-C₁₀-Alkylestern, Ameisensäurevinylester, C₁-C₁₀-Alkylcarbonsäurevinylester, C₁-C₂₀-Alkylvinyl- und allylethern und α-Olefinen mit 3 bis 40 C-Atomen.

13. Gegenstand mit mindestens einer Oberfläche nach Anspruch 12.

14. Wässrige Formulierung, enthaltend 0,01 bis 40 Gew.-% Copolymer (A), das als Comonomere einpolymerisiert enthält:
(a) Ethylen,
(b) einen oder mehrere Alkenylphosphonsäurediester,
kein weiteres Comonomer oder
(c) ein oder mehrere weitere radikalisch copolymerisierbare Comonomere, gewählt aus ethylenisch ungesättigten Carbonsäuren, ethylenisch ungesättigten C₄-C₁₀-Dicarbonsäuren und deren Anhydriden, (Meth)acrylsäure-C₁-C₁₀-Alkylestern, Ameisensäurevinylester, C₁-C₁₀-Alkylcarbonsäurevinylester, C₁-C₂₀-Alkylvinyl- und allylethern und α-Olefinen mit 3 bis 40 C-Atomen.

15. Wässrige Formulierung nach Anspruch 14, enthaltend mindestens einen Zusatzstoff, gewählt aus Dispergiermitteln, Tensiden, Korrosionsinhibitoren, Antioxidatien, Bioziden, Wachsen, Komplexbildnern, Metallsalzen, Säuren und Basen.

16. Copolymere (A'), die als Comonomere einpolymerisiert enthalten:
(a) Ethylen,
(b) einen oder mehrere Alkenylphosphonsäurediester,
(c') mindestens ein Comonomer, gewählt aus ethylenisch ungesättigten Carbonsäuren und ethylenisch ungesättigten C₄-C₁₀-Dicarbonsäuren und deren Anhydriden,
(c) und gegebenenfalls ein oder mehrere weitere radikalisch copolymerisierbare Comonomere, gewählt aus ethylenisch ungesättigten Carbonsäuren, ethylenisch ungesättigten C₄-C₁₀-Dicarbonsäuren und deren Anhydriden, (Meth)acrylsäure-C₁-C₁₀-Alkylestern, Ameisensäurevinylester, C₁-C₁₀-Alkylcarbonsäurevinylester, C₁-C₂₀-Alkylvinyl-und allylethern und α-Olefinen mit 3 bis 40 C-Atomen,
gegebenenfalls partiell oder vollständig neutralisiert.

17. Verfahren zur Herstellung von Copolymeren (A') nach Anspruch 16, **dadurch gekennzeichnet, dass** man
(a) Ethylen,
(b) einen oder mehrere Alkenylphosphonsäurediester,
(c') mindestens ein Comonomer, gewählt aus ethylenisch ungesättigten Carbonsäuren und ethylenisch ungesättigten C₄-C₁₀-Dicarbonsäuren und deren Anhydriden
(c) und gegebenenfalls ein oder mehrere weitere radikalisch copolymerisierbare Comonomere,
bei 500 bis 4000 bar und Reaktionstemperaturen im Bereich von 150 bis 300°C miteinander copolymerisiert.

18. Wässrige Formulierung, enthaltend 0,01 bis 40 Gew.-% Copolymer (A') nach Anspruch 16.

## Claims

1. The use of a copolymer (A) comprising as comonomers in copolymerized form
(a) ethylene,
(b) one or more alkenylphosphonic diesters,
no further comonomer or
(c) one or more other free-radically copolymerizable comonomers selected from ethylenically unsaturated carboxylic acids, ethylenically unsaturated C₄-C₁₀-dicarboxylic acids and their anhydrides, (meth)acrylic acid C₁-C₁₀-alkyl esters, vinyl formate, C₁-C₁₀-alkylcarboxylic acid vinyl ester C₁-C₂₀-alkyl vinyl ethers and C₁-C₂₀-alkyl allyl ethers, and α-olefins having 3 to 40 carbon atoms,
for treating surfaces.

2. A method of treating surfaces using one or more than one copolymer (A) comprising as comonomers in copolymerized form:
(a) ethylene,
(b) one or more alkenylphosphonic diesters,
no further comonomer or
(c) one or more other free-radically copolymerizable comonomers selected from ethylenically unsaturated carboxylic acids, ethylenically unsaturated C₄-C₁₀-dicarboxylic acids and their anhydrides, (meth)acrylic acid C₁-C₁₀-alkyl esters, vinyl formate, C₁-C₁₀-alkylcarboxylic acid vinyl ester, C₁-C₂₀-alkyl vinyl ethers and C₁-C₂₀-alkyl allyl ethers, and α-olefins having 3 to 40 carbon atoms.

3. The method according to claim 2, wherein copolymer (A) is a copolymer having an average molecular weight M_{w} in the range from 1000 to 500 000 g/mol.

4. The method according to either of claims 2 and 3, wherein alkenylphosphonic diester (b) is a compound of the general formula I 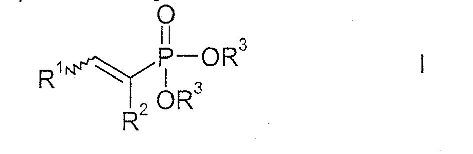 whose variables are defined as follows:
R¹ is selected from hydrogen and unbranched and branched C₁-C₁₀-alkyl,
R² is selected from hydrogen and unbranched and branched C₁-C₁₀-alkyl,
R³ is identical or different at each occurrence and is selected from phenyl, benzyl and unbranched and branched C₁-C₁₀-alkyl, it being possible for the radicals R³ to be joined to one another to form a five- to 10-membered ring.

5. The method according to any one of claims 2 to 4, wherein R¹ and R² are each hydrogen and the radicals R³ are each identical and selected from C₁-C₄-alkyl.

6. The method according to any one of claims 2 to 5, wherein a metal surface or polymer surface, which may be unpretreated or pretreated, is provided with a layer of copolymer (A).

7. The method according to any one of claims 2 to 5, wherein a metal surface or polymer surface is wetted with a solution of copolymer (A).

8. The method according to any one of claims 2 to 7, wherein a metal surface or polymer surface is treated with an aqueous formulation of copolymer (A).

9. The method according to any one of claims 2 to 8, wherein the metal surface or polymer surface is treated by a continuous coil process.

10. The method according to any one of claims 2 to 9, wherein a metal surface or polymer surface, which may be unpretreated or pretreated, is provided with a layer of copolymer (A) and thereafter with a further coating material.

11. The method according to any one of claims 2 to 10, wherein other free-radically copolymerizable comonomers (c) are selected from (meth)acrylic acid, (meth)acrylic acid C₁-C₁₀-alkyl ester, vinyl formate, C₁-C₁₀-alkylcarboxylic acid vinyl ester, ethylenically unsaturated C₄-C₁₀-dicarboxylic acids and their anhydrides, C₁-C₂₀-alkyl vinyl ethers, C₁-C₂₀-alkyl allyl ethers, and α-olefins having 3 to 40 C atoms.

12. A polymer surface or metal surface coated with copolymer (A) comprising as comonomers in copolymerized form:
(a) ethylene,
(b) one or more alkenylphosphonic diesters,
no further comonomer or
(c) one or more other free-radically copolymerizable comonomers selected from ethylenically unsaturated carboxylic acids, ethylenically unsaturated C₄-C₁₀-dicarboxylic acids and their anhydrides, (meth)acrylic acid C₁-C₁₀-alkyl esters, vinyl formate, C₁-C₁₀-alkylcarboxylic acid vinyl ester, C₁-C₂₀-alkyl vinyl ethers and C₁-C₂₀-alkyl allyl ethers, and α-olefins having 3 to 40 carbon atoms.

13. An article having at least one surface according to claim 12.

14. An aqueous formulation comprising 0.01 % to 40% by weight of copolymer (A) comprising as comonomers in copolymerized form:
(a) ethylene,
(b) one or more alkenylphosphonic diesters,
no further comonomer or
(c) one or more other free-radically copolymerizable comonomers selected from ethylenically unsaturated carboxylic acids, ethylenically unsaturated C₄-C₁₀-dicarboxylic acids and their anhydrides, (meth)acrylic acid C₁-C₁₀-alkyl esters, vinyl formate, C₁-C₁₀-alkylcarboxylic acid vinyl ester, C₁-C₂₀-alkyl vinyl ethers and C₁-C₂₀-alkyl allyl ethers, and α-olefins having 3 to 40 carbon atoms.

15. The aqueous formulation according to claim 14, comprising at least one additive selected from dispersants, surfactants, corrosion inhibitors, antioxidants, biocides, waxes, complexing agents, metal salts, acids, and bases.

16. A copolymer (A') comprising as comonomers in copolymerized form:
(a) ethylene,
(b) one or more alkenylphosphonic diesters,
(c') at least one comonomer selected from ethylenically unsaturated carboxylic acids and ethylenically unsaturated C₄-C₁₀-dicarboxylic acids and their anhydrides,
(c) and if appropriate, one or more other free-radically copolymerizable comonomers, selected from ethylenically unsaturated carboxylic acids, ethylenically unsaturated C₄-C₁₀-dicarboxylic acids and their anhydrides, (meth)acrylic acid C₁-C₁₀-alkyl esters, vinyl formate, C₁-C₁₀-alkylcarboxylic acid vinyl ester, C₁-C₂₀-alkyl vinyl ethers and C₁-C₂₀-alkyl allyl ethers, and α-olefins having 3 to 40 carbon atoms,
if appropriate in partly or fully neutralized form.

17. A process for preparing a copolymer (A') according to claim 16, which comprises copolymerizing
(a) ethylene,
(b) one or more alkenylphosphonic diesters,
(c') at least one comonomer selected from ethylenically unsaturated carboxylic acids and ethylenically unsaturated C₄-C₁₀-dicarboxylic acids and their anhydrides,
(c) and if appropriate, one or more other free-radically copolymerizable comonomers,
with one another at 500 to 4000 bar and reaction temperatures in the range from 150 to 300°C.

18. An aqueous formulation comprising 0.01 % to 40% by weight of copolymer (A') according to claim 16.

## Revendications

1. Utilisation de copolymères (A), qui contiennent en tant que comonomères intégrés par polymérisation
(a) de l'éthylène,
(b) un ou plusieurs diesters d'acides alcénylphosphoniques,
aucun autre comonomère ou
(c) un ou plusieurs autres comonomères copolymérisables par voie radicalaire, choisis parmi des acides carboxyliques à insaturation éthylénique, des acides dicarboxyliques en C₄-C₁₀ à insaturation éthylénique et leurs anhydrides, des (méth)acrylates d'alkyle en C₁-C₁₀, des esters vinyliques d'acide formique, des esters vinyliques d'acides alkyl(C₁-C₁₀)-carboxyliques, des éthers allyliques et alkyl(C₁-C₂₀)vinyliques et des α-oléfines ayant de 3 à 40 atomes de carbone,
pour le traitement de surfaces.

2. Procédé pour le traitement de surfaces avec utilisation d'un ou plusieurs copolymères (A), qui contiennent en tant que comonomères intégrés par polymérisation
(a) de l'éthylène,
(b) un ou plusieurs diesters d'acides alcénylphosphoniques,
aucun autre comonomère ou
(c) un ou plusieurs autres comonomères copolymérisables par voie radicalaire, choisis parmi des acides carboxyliques à insaturation éthylénique, des acides dicarboxyliques en C₄-C₁₀ à insaturation éthylénique et leurs anhydrides, des (méth)acrylates d'alkyle en C₁-C₁₀, des esters vinyliques d'acide formique, des esters vinyliques d'acides alkyl(C₂-C₁₀)-carboxyliques, des éthers allyliques et alkyl(C₁-C₂₀)vinyliques et des α-oléfines ayant de 3 à 40 atomes de carbone.

3. Procédé selon la revendication 2, **caractérisé en ce que** le copolymère (A) consiste en des copolymères ayant une masse moléculaire moyenne M_{w} dans la plage de 1000 à 500 000 g/mole.

4. Procédé selon la revendication 2 ou 3, **caractérisé en ce que** les diesters d'acides alcénylphosphoniques (b) consistent en un composé de formule générale I 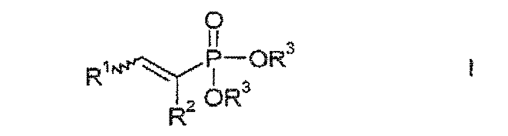 dans laquelle les variables sont définies comme suit :
R¹ est choisi parmi un atome d'hydrogène et un groupe alkyle en C₁-C₁₀ ramifié ou non ramifié,
R² est choisi parmi un atome d'hydrogène et un groupe alkyle en C₁-C₁₀ ramifié ou non ramifié,
R³ sont identiques ou différents et choisis parmi le groupe phényle, le groupe benzyle et un groupe alkyle en C₁-C₁₀ ramifié ou non ramifié, les radicaux R³ pouvant être liés l'un à l'autre avec formation d'un cycle à 5-10 chaînons.

5. Procédé selon l'une quelconque des revendications 2 à 4, **caractérisé en ce que** R¹ et R² représentent chacun un atome d'hydrogène et les radicaux R³ sont identiques et choisis parmi des groupes alkyle en C₁-C₄.

6. Procédé selon l'une quelconque des revendications 2 à 5, **caractérisé en ce qu'**on munit d'une couche de copolymère (A) une surface de métal ou polymère, qui peut être prétraitée ou non prétraitée.

7. Procédé selon l'une quelconque des revendications 2 à 5, **caractérisé en ce qu'**on humecte une surface de métal ou polymère avec une solution de copolymère (A).

8. Procédé selon l'une quelconque des revendications 2 à 7, **caractérisé en ce qu'**on traite une surface de métal ou polymère par une composition aqueuse de copolymère (A).

9. Procédé selon l'une quelconque des revendications 2 à 8, **caractérisé en ce qu'**on traite la surface de métal ou polymère selon un procédé continu sur bande.

10. Procédé selon l'une quelconque des revendications 2 à 9, **caractérisé en ce qu'**on munit une surface de métal ou polymère, qui peut être prétraitée ou non prétraitée, d'une couche de polymère (A) et ensuite d'un autre produit de revêtement.

11. Procédé selon l'une quelconque des revendications 2 à 10, **caractérisé en ce que** les autres comonomères (c) copolymérisables par voie radicalaire sont choisis parmi l'acide (méth)acrylique, des (méth)acrylates d'alkyle en C₁-C₁₀, des esters vinyliques d'acide formique, des esters vinyliques d'acides alkyl(C₁-C₁₀)-carboxyliques, des acides dicarboxyliques en C₄-C₁₀ à insaturation éthylénique et leurs anhydrides, des éthers allyliques et alkyl(C₁-C₂₀)vinyliques et des α-oléfines ayant de 3 à 40 atomes de carbone.

12. Surface de métal ou polymère, revêtue avec un copolymère (A) qui contient en tant que comonomères :
(a) de l'éthylène,
(b) un ou plusieurs diesters d'acides alcénylphosphoniques,
aucun autre comonomère ou
(c) un ou plusieurs autres comonomères copolymérisables par voie radicalaire, choisis parmi des acides carboxyliques à insaturation éthylénique, des acides dicarboxyliques en C₄-C₁₀ à insaturation éthylénique et leurs anhydrides, des (méth)acrylates d'alkyle en C₁-C₁₀, des esters vinyliques d'acide formique, des esters vinyliques d'acides alkyl(C₁-C₁₀)-carboxyliques, des éthers allyliques et alkyl(C₁-C₂₀)vinyliques et des α-oléfines ayant de 3 à 40 atomes de carbone.

13. Article présentant au moins une surface selon la revendication 12.

14. Composition aqueuse, contenant de 0,01 à 40 % en poids de copolymère (A), qui contient en tant que comonomères intégrés par polymérisation :
(a) de l'éthylène,
(b) un ou plusieurs diesters d'acides alcénylphosphoniques,
aucun autre comonomère ou
(c) un ou plusieurs autres comonomères copolymérisables par voie radicalaire, choisis parmi des acides carboxyliques à insaturation éthylénique, des acides dicarboxyliques en C₄-C₁₀ à insaturation éthylénique et leurs anhydrides, des (méth)acrylates d'alkyle en C₁-C₁₀, des esters vinyliques d'acide formique, des esters vinyliques d'acides alkyl(C₁-C₁₀)-carboxyliques, des éthers allyliques et alkyl(C₁-C₂₀)vinyliques et des α-oléfines ayant de 3 à 40 atomes de carbone.

15. Composition aqueuse selon la revendication 14, contenant au moins un additif, choisi parmi des dispersants, des tensioactifs, des agents anticorrosion, des antioxydants, des biocides, des cires, des complexants, des sels métalliques, des acides et des bases.

16. Copolymères (A'), qui contiennent en tant que comonomères intégrés par polymérisation :
(a) de l'éthylène,
(b) un ou plusieurs diesters d'acides alcénylphosphoniques,
(c') au moins un comonomère, choisi parmi des acides carboxyliques à insaturation éthylénique et des acides dicarboxyliques en C₄-C₁₀ à insaturation éthylénique et leurs anhydrides,
(c) et éventuellement un ou plusieurs autres comonomères copolymérisables par voie radicalaire, choisis parmi des acides carboxyliques à insaturation éthylénique, des acides dicarboxyliques en C₄-C₁₀ à insaturation éthylénique et leurs anhydrides, des (méth)acrylates d'alkyle en C₁-C₁₀, des esters vinyliques d'acide formique, des esters vinyliques d'acides alkyl(C₁-C₁₀)carboxyliques, des éthers allyliques et alkyl(C₁-C₂₀)vinyliques et des α-oléfines ayant de 3 à 40 atomes de carbone.
éventuellement partiellement ou totalement neutralisés.

17. Procédé pour la préparation de copolymères (A') selon la revendication 16, **caractérisé en ce qu'**on copolymérise entre eux
(a) de l'éthylène,
(b) un ou plusieurs diesters d'acides alcénylphosphoniques,
(c') au moins un comonomère, choisi parmi des acides carboxyliques à insaturation éthylénique et des acides dicarboxyliques en C₄-C₁₀ à insaturation éthylénique et leurs anhydrides,
(c) et éventuellement un ou plusieurs autres comonomères copolymérisables par voie radicalaire,
sous 500 à 4000 bars et à des températures de réaction dans la plage de 150 à 300 °C.

18. Composition aqueuse, contenant de 0,01 à 40 % en poids de copolymère (A') selon la revendication 16.
